# EUROPEAN PATENT APPLICATION

(11) **EP 4 239 614 A2**
(43) Date of publication of application: **06.09.2023**
(21) Application number: 23181130.8
(22) Date of filing: 25.02.2021
(51) Int. Cl.: G08G 1/14, G08G 1/123

(54) **SYSTEMS AND METHODS FOR IMAGE-BASED LOCATION DETERMINATION AND PARKING MONITORING**

(30) Priority: 10.03.2020 AU 2020900736; 18.08.2020 AU 2020902942
(62) Divisional of application: 21767330.0
(71) Applicant: Sensen Networks Group Pty Ltd, Abbotsford, Victoria 3067 (AU)
(72) Inventor: CHALLA, Subhash, Abbotsford, 3067 (AU); VO, Nhat, Abbotsford, 3067 (AU); QUINN, Louis, Abbotsford, 3067 (AU); VO, Duc, Abbotsford, 3067 (AU)
(74) Representative: Latham, Stuart Alexander

(57) **Abstract**

Embodiments relate to systems, methods and computer readable media for parking monitoring in an urban area by image processing operations. Embodiments perform parking monitoring by capturing images of an urban area, comparing captured images with reference images to determine location and parking conditions. Embodiments processes captured images to detect licence plates, vehicles or parking signs to determine compliance of vehicles with parking conditions.

## Description

### Technical Field

Embodiments relate to systems and methods for location estimation or determination. Embodiments relate to systems and methods for image-based location estimation or determination. Embodiments also relate to systems and methods of using image-based location estimation or determination for parking monitoring.

### Background

Global Positioning System (GPS) technologies assist in determination of location by communication with GPS specialised satellites in communication with a GPS receiver. Each GPS satellite continuously transmits a radio signal containing the current time and data about its position. The time delay between when the satellite transmits a signal and the receiver receives it is proportional to the distance from the satellite to the receiver. A GPS receiver monitors multiple satellites and solves equations to determine the precise position of the receiver and its deviation from true time. To get accurate location information, four satellites must be in view of the GPS receiver for it to compute four unknown quantities (three position coordinates and clock deviation from satellite time).

GPS based location estimation requires an unobstructed line of sight to at least four satellites to accurately locate the position of the GPS receiver. Poor connectivity to GPS satellites or connectivity to less than 4 GPS satellites leads to inaccuracies in determination of location based on GPS. Connectivity to GPS satellites may also be affected by extreme atmospheric conditions, such as geomagnetic storms. Obstacles such as walls, buildings, skyscrapers and trees may obstruct the line of sight of a GPS receiver resulting in inaccurate location estimation. In areas where a number of obstructions are present, such as in parts of cities with several obstructions such as skyscrapers or trees, GPS location information may be unreliable or inaccurate.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Summary

Some embodiments relate to a system for parking monitoring in an urban area, the system comprising:
at least one camera, wherein the at least one camera is positioned to capture images of the urban area;
a computing device in communication with the at least one camera to receive the captured images;
the computing device comprising at least one processor and a memory accessible to the at least one processor;
wherein the memory comprises a library of reference background images and metadata for each reference background image, wherein the metadata comprises parking location information and parking condition information;
wherein the memory stores program code executable by the at least one processor to configure the at least one processor to:
   process a first captured image to determine a licence plate number corresponding to a target vehicle in the first captured image;
   process a second captured image using a background matching module to identify a matching reference background image;
   determine an identified parking location of the target vehicle and at least one parking condition based on the metadata of the matching reference background image;
   determine compliance of the target vehicle with the determined at least one parking condition.

In some embodiments, the first captured image is the same captured image as the second captured image.

Some embodiments relate to a system for parking monitoring in an urban area, the system comprising:
at least one camera, wherein the at least one camera is positioned to capture images of the urban area;
a computing device in communication with the at least one camera to receive the captured images;
the computing device comprising at least one processor and a memory accessible to the at least one processor;
wherein the memory comprises a library of reference background images and metadata for each reference background image, wherein the metadata comprises parking location information;
the memory also comprises program code executable by the at least one processor to configure the at least one processor to:
   process the captured images using a parking indicator detection machine learning model to identify a parking indicator in at least one of the captured images;
   on identifying the parking indicator, process the captured images using a background matching module to identify a matching reference background image that matches one of the captured images;
   determine a parking location based on the metadata associated with the matching reference background image;
   determine parking conditions based on the identified parking indicator;
   process the captured images to determine a licence plate number corresponding to a target vehicle; and
   determine compliance of the target vehicle to the determined parking conditions.

In some embodiments, the licence plate number corresponding to the target vehicle is determined using a licence plate detection machine learning model.

In some embodiments, the parking indicators comprise parking signs or licence plates and the parking indicator detection machine learning model detects parking signs or licence plates in the captured images.

In some embodiments, the memory further comprises parking perimeter metadata associated with each reference background image, and the at least one processor is further configured to:
process the at least one captured image to identify an image portion corresponding to the target vehicle in one of the captured images;
determine compliance of the target vehicle to the determined parking conditions based on the parking perimeter metadata associated with the matching reference background image and the image portion corresponding to the target vehicle.

In some embodiments, the image portion corresponding to the target vehicle is identified using a vehicle detection machine learning model.

In some embodiments, the background matching module comprises: a background feature extractor neural network, and the at least one processor is further configured to identify the matching reference background image by:
extracting background descriptors from the at least one captured image using the background feature extractor neural network;
selecting one or more candidate matching images from the library of background images based on the extracted background descriptors;
performing geometric matching between the at least one captured image and the candidate matching images to select the matching reference background image.

In some embodiments, the geometric matching is performed using a random sample consensus process.

The parking location information may comprise a street name and a street number; or the parking location information may comprise a street name, a street number and a parking bay identifier; or the parking location information may comprise a longitude coordinate and a latitude coordinate associated with the parking location.

In some embodiments, the one or more cameras are mounted on a surveillance vehicle,
the computing device is carried by the surveillance vehicle, and
the system further comprises a communication module to enable wireless communication between the computing device and a remote computer system.

Some embodiments are configured to perform parking monitoring in real time as the surveillance vehicle moves in the urban area.

In some embodiments, the system comprises at least two cameras, with at least one camera positioned on each side of the surveillance vehicle to perform parking monitoring on both sides of the surveillance vehicle.

In some embodiments, the system comprises at least two cameras, both cameras are positioned to capture images on one side of the surveillance vehicle; and the background matching module is configured to perform background matching using captured images from each of the at least two cameras to identify a matching reference background image.

Some embodiments are further configures to track the target vehicle across the captured images as the surveillance vehicle moves in the urban area.

Some embodiments are further configured to transmit to the remote computer system via the communication module one or more of: the determined compliance of the target vehicle with the determined parking conditions; the determined licence plate number corresponding to the target vehicle; the determined parking location; or captured images of the target vehicle.

In some embodiments, the licence plate detection machine learning model is configured to identify a portion of the captured image corresponding to a license plate of the target vehicle, and the licence plate number is determined based on processing the portion of the captured image corresponding to the license plate by a character recognition module.

In some embodiments, the parking conditions are determined based on characters recognised by processing a portion of the at least one captured image corresponding to the identified parking signs using a character recognition module.

In some embodiments, at least one reference background image relates to a parking zone start location and another at least one reference background image relates to a parking zone end location, and determination of compliance of the target vehicle to the identified at least one parking condition is based on: distance between the identified parking location and the parking zone start location; or distance between the identified parking location and the parking zone end location.

Some embodiments relate to a computer implemented method for parking monitoring performed by a computing device comprising at least one processor in communication with a memory, the memory comprising a library of reference background images, the method comprising:
receiving images of an urban area captured by a camera in communication with the computing device;
processing the captured images using a parking indicator detection machine learning model to identify one or more parking indicators in at least one captured image;
on identifying at least one parking indicator in the at least one captured image, process the at least one captured image using a background matching module to identify a matching reference background image;
determining a parking location based on the matching reference background image;
determining parking conditions based on the determined parking location or the identified one or more parking indicators;
processing the at least one captured image to determine a licence plate number corresponding to a target vehicle in the at least one captured image; and
determining compliance of the target vehicle to the determined parking conditions based on the determined licence plate number and the determined parking conditions.

Some embodiments relate to a system for location determination, the system comprising:
a computing device comprising at least one processor and a memory accessible to the at least one processor;
wherein the memory comprises a library of reference background images and metadata for each reference background image, wherein the metadata comprises location information; and
wherein the memory stores program code executable by the at least one processor to configure the at least one processor to:
   receive an input image data from a remote computing device, wherein the input image data includes image data of at least one image captured by the remote computing device at a location to be determined;
   process the received input image data using a background matching module to identify matching reference background image;
   determine location information corresponding to the input image data based on the metadata of the matching reference background image in the library; and
   transmit the determined location information to the remote computing device.

In some embodiments, the background matching module comprises: a background feature extractor neural network, and the at least one processor is further configured to identify the matching reference background image by:
extracting background descriptors from the at least one captured image using the background feature extractor neural network;
selecting one or more candidate matching images from the library of background images based on the extracted background descriptors;
performing geometric matching between the at least one captured image and the candidate matching images to select the matching reference background image.

In some embodiments, the geometric matching comprises identifying common visual features in the at least one captured image and each of the candidate matching images.

In some embodiments, the geometric matching is performed using a random sample consensus process.

In some embodiments, the background feature extractor neural network is trained to extract background descriptors corresponding to one or more stationary features in the at least one captured image.

In some embodiments, the memory stores program code executable by the at least one processor to further configure the at least one processor to:
receive GPS data corresponding to the input image from the remote computing device, wherein the GPS data comprises a low data quality indicator;
generate a GPS correction signal based on the determined location information;
transmit the GPS correction signal to the remote computing device.

Some embodiments relate to a vehicle mounted system for location determination in an urban area, the system comprising:
at least one camera, wherein the at least one camera is positioned to capture images of the urban area;
a computing device in communication with the at least one camera to receive the captured images, the computing device comprising at least one processor and a memory accessible to the at least one processor, the memory comprising a library of reference background images;
wherein the memory comprises program code executable by the at least one processor to configure the at least one processor to:
   extract background descriptors from at least one captured image;
   select one or more candidate matching reference images from the library of background images based on the extracted background descriptors;
   perform geometric matching between the at least one captured image and the one or more candidate matching reference images to select a single matching reference background image; and
   determine a location of the vehicle based on the single matching reference background image.

In some embodiments, the memory further comprises location metadata corresponding to each reference background image; and the location of the vehicle is determined based on the location metadata corresponding to corresponding to the single matching reference background image.

In some embodiments, the background descriptors are extracted from at least one captured image using a background feature extractor neural network.

In some embodiments, determining the location is performed in real time.

Some embodiments relate to a computer implemented method for determining a location of a vehicle, the method performed by a vehicle mounted computing device comprising at least one processor in communication with a memory, the memory comprising a library of reference background images, the method comprising:
receiving images of an urban area captured by a camera in communication with the computing device;
extracting background descriptors from at least one image captured by the camera;
selecting one or more candidate matching reference images from the library of background images based on the extracted background descriptors;
perform geometric matching between the at least one captured image and the one or more candidate matching reference images to select a single matching reference background image; and
determine a location of the vehicle based on the single matching reference background image.

Some embodiments relate to a computer implemented method for determining a location of a vehicle in an urban area, the method performed by a vehicle mounted computing device comprising at least one processor in communication with a memory and at least one camera, the memory comprising a library of reference background images, the method comprising:
capturing an image of the urban area while the at least one camera is moving in the urban area;
processing the captured image using a background matching module to identify a matching reference background image;
determining a location of the vehicle based on a metadata of the matching reference background image.

In some embodiments, the at least one camera is mounted on the vehicle.

In some embodiments, the determination of the location of the vehicle is performed in real time by the vehicle mounted computing device.

Some embodiments relate to a system for location determination in an urban area, the system comprising:
at least one camera, wherein the at least one camera is positioned to capture images of the urban area while the at least one camera is moving in the urban area;
a computing device moving with the at least one camera and in communication with the at least one camera to receive the captured images;
the computing device comprising at least one processor and a memory accessible to the at least one processor;
wherein the memory comprises a library of reference background images and metadata for each reference background image, wherein the metadata comprises location information;
wherein the memory stores program code executable by the at least one processor to configure the at least one processor to:
   process a captured image using a background matching module to identify a matching reference background image;
   determine a location of the at least one camera and the computing device based on the metadata of the matching reference background image.

In some embodiments, processing the captured image using a background matching module comprises: extracting background descriptors from the captured image; selecting one or more candidate matching images from the library of reference background images based on the extracted background descriptors; performing geometric matching between the captured image and the candidate matching images to select the matching reference background image.

In some embodiments, the background matching module comprises a background feature extractor neural network configured to extract background descriptors corresponding to one or more stationary features in the at least one captured image.

In some embodiments, the geometric matching is performed using a random sample consensus process; and wherein the geometric matching comprises identifying common visual features in the at least one captured image and each of the candidate matching images.

In some embodiments, the computing device is configured to determine the location in real-time.

In some embodiments, the at least one camera is mounted on the vehicle to capture images of a vicinity of the vehicle.

In some embodiments, the vehicle is an autonomous driving vehicle.

In some embodiments, the vehicle comprises an on-board GPS receiver and the vehicle is configured to trigger location determination using the system for location determination in response to an image based location determination trigger event.

In some embodiments, the image based location determination trigger event may comprise at least one of:
low precision GPS data being generated by the on-board GPS receiver; or
crossing of a predefined geo-fence by the vehicle.

Some embodiments relate to a computer implemented method for location determination, the method performed by a computing device comprising at least one processor in communication with a memory, the method comprising:
receiving an input image by the computing device from a remote computing device, wherein the input image corresponds to a location to be determined;
processing the received input image using a background matching module provided in the memory of the computing device to identify a matching reference background image from among a library of reference background images stored in the memory;
determining location information corresponding to the input image based on the metadata of the matching reference background image; and
transmitting the determined location information to the remote computing device.

In some embodiments, the background matching module comprises: a background feature extractor neural network, and the method further comprises identifying the matching reference background image by:
extracting background descriptors from the at least one captured image using the background feature extractor neural network;
selecting one or more candidate matching images from the library of background images based on the extracted background descriptors;
performing geometric matching between the at least one captured image and the candidate matching images to select the matching reference background image.

In some embodiments, the geometric matching comprises identifying common visual features in the at least one captured image and each of the candidate matching images.

In some embodiments, the geometric matching is performed using a random sample consensus process.

In some embodiments, the background feature extractor neural network is trained to extract background descriptors corresponding to one or more permanent stationary features in the at least one captured image.

In some embodiments, the method further comprises:
receiving GPS data corresponding to the input image from the remote computing device, wherein the GPS data comprises a low data quality indicator;
generating a GPS correction signal based on the determined location information;
transmitting the GPS correction signal to the remote computing device;
wherein the GPS correction signal comprises information accessible by the remote computing device to determine a more accurate GPS location data.

Some embodiments relate to a computer-readable storage medium storing instructions that when executed by a computer cause the computer to perform the method of parking monitoring according to any one of the embodiments.

Some embodiments relate to a system for parking monitoring in an urban area, the system comprising:
at least one camera, wherein the at least one camera is positioned to capture images of the urban area;
a computing device in communication with the at least one camera to receive the captured images;
the computing device comprising at least one processor and a memory accessible to the at least one processor;
wherein the memory comprises a library of reference background images;
the memory also comprises program code executable by the at least one processor to configure the at least one processor to:
   process the captured images using a parking indicator detection machine learning model to identify one or more parking indicators in at least one captured image;
   on identifying at least one parking indicator in the at least one captured image, process the at least one captured image using a background matching module to identify a matching reference background image;
   determine a parking location based on the matching reference background image;
   determine parking conditions based on the determined parking location or the identified one or more parking indicators;
   process the at least one captured image to determine a licence plate number corresponding to a target vehicle in the at least one captured image; and
   determine compliance of the target vehicle to the determined parking conditions based on the determined licence plate number and the determined parking conditions.

### Brief Description of Drawings

Figure 1 is a block diagram of a parking monitoring system according to some embodiments;
Figure 2 is a flowchart of a process for parking monitoring according to some embodiments;
Figure 3 is a flowchart of a process for location determination according to some embodiments;
Figures 4 to 8 are examples of captured images illustrating parking indicator identification and vehicle identification;
Figure 8 is an example pair of images illustrating a background matching process;
Figure 9 is an example of a reference background image;
Figure 10 is an example of a captured image corresponding to the same parking location as the reference background image of Figure 9;
Figure 11 is an image obtained by superimposing the image of Figure 9 on the image of Figure 10;
Figure 12 is an image of a portion of a surveillance vehicle according to some embodiments;
Figure 13 is a flowchart of a process for image annotation according to some embodiments;
Figure 14 is a screenshot an image annotation user interface according to some embodiments;
Figure 15 is an image illustrating an outcome of automatic location extrapolation according to some embodiments;
Figure 16 a schematic diagram illustrating some aspects of parking monitoring according to some embodiments;
Figure 17 a schematic diagram illustrating some aspects of parking monitoring according to some embodiments;
Figure 18 is a block diagram of a system for location determination according to some embodiments;
Figure 19 is a flowchart of a process of location determination performed by the system of Figure 18;
Figure 20 is a block diagram of part of an autonomous vehicle according to some embodiments;
Figure 21 is an example pair of images illustrating a background matching process; and
Figure 22 illustrates an example computer system according to some embodiments.

### Detailed Description

The described embodiments relate to systems and methods for location estimation using images. In urban areas with a high density of buildings, GPS signal connectivity and accuracy are often poor on the street or ground level, leading to inaccurate location estimation using GPS devices. The described embodiments rely on image processing techniques to determine location information in real-time or near real-time.

Some described embodiments also relate to systems and methods for monitoring parking and compliance with parking conditions in urban areas. Parking spaces are often a limited resource in urban areas. Urban areas may also have several parking conditions or restrictions in place to best allocate the limited parking resources while managing the efficiency of traffic. Parking spaces may also be a source of revenue for municipal organisations. The effectiveness of parking conditions or restrictions depends on the degree of continuous enforcement. Without appropriate enforcement in place, parking conditions may often be violated, affecting the fair allocation of the parking resources and undermining the efficiency of traffic.

Some embodiments relate to systems and methods for location estimation suitable for use by or in an autonomous vehicle.

Described embodiments rely on image processing techniques to determine location in an urban area by matching persistent background in images. Some embodiments also rely on image processing techniques to identify objects such as parking signs, vehicles and licence plates. Some embodiments rely on character recognition techniques to recognise characters in parking signs or vehicle licence plates. Some embodiments also track identified objects through several images to deduplicate any identified objects and provide more reliable results. Some embodiments may be mounted on a surveillance vehicle that goes around an urban area assessing compliance with parking conditions in real time. The surveillance vehicle may include a car, van or other moving vehicle capable of traversing the streets or roads of the urban area, for example.

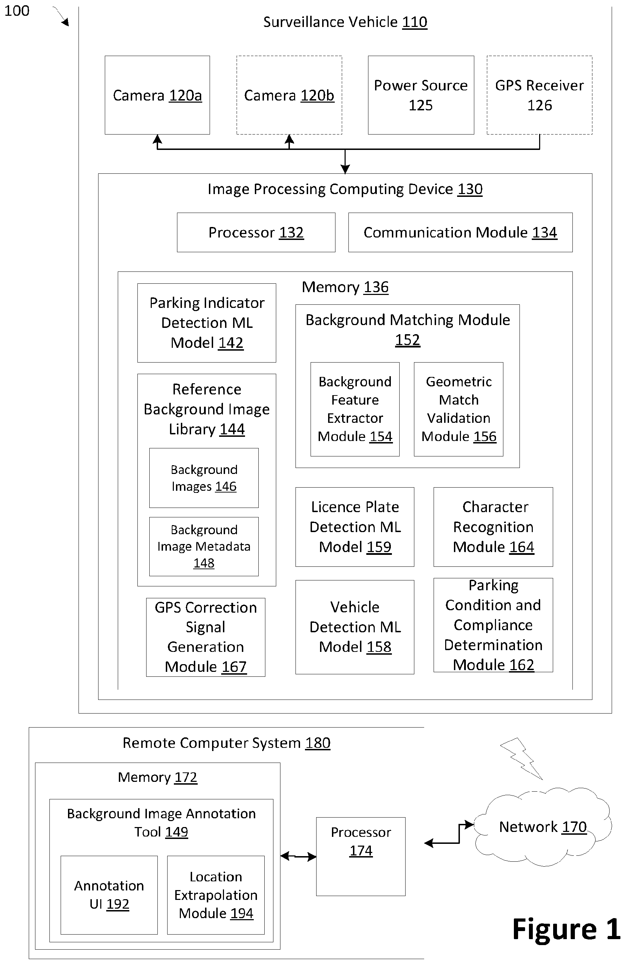

**Figure 1** is a block diagram of a system 100 according to some embodiments. System 100 comprises a surveillance vehicle 110 in wireless communication with a remote computer system 180 over the network 170. The surveillance vehicle comprises at least one camera 120. In some embodiments, the surveillance vehicle may comprise multiple cameras 120. In some embodiments, the camera 120 may be mounted on a roof of the surveillance vehicle 110. The camera 120 may be at an appropriate angle to the direction of motion of the surveillance vehicle 110 to get suitable imagery to perform the parking monitoring. In some embodiments, the surveillance vehicle may comprise 6 cameras, 3 cameras facing each lateral (left and right) side of the surveillance vehicle. The 3 cameras on each side may be positioned at an angle of 45-degree, 90-degree, and 135-degree respectively to the direction of motion of the surveillance vehicle, for example. The different angles may enable capturing images of the urban area from different perspectives. Images from different perspectives may be used to improve accuracy of the system by redundantly performing the various operations using images from different angles. Further, some street signage may be parallel to the street, other street signage may be perpendicular or at an angle to the street. Cameras 120 at different angles may enable capturing street signage at various angles. Each camera 120 may capture images at a resolution of 3072 x 1728 pixels, for example.

System 100 also comprises an image processing computing device 130. The image processing computing device 130 is in communication with the camera 120. Computing device 130 may be positioned inside the vehicle 110 or on the vehicle 110 in a secure housing. The computing device 130 comprises at least one processor 132, a communication module 134, and memory 136. Memory 136 may include both volatile and non-volatile memory. In some embodiments, the processor 132 may be specifically designed for accelerating the operation of machine learning programs or processes. In particular, the at least one processor 132 may comprise a graphics processing unit (GPU) to accelerate execution of machine learning processes or programs. GPUs enable highly parallel computing operations and are therefore more suitable for execution of machine learning processes or programs to obtain results in real-time or near real-time. For example, some embodiments may incorporate an NVIDIA^{™} Jetson embedded computing board to provide the processor 132.

Memory 136 comprises a parking indicator detection machine learning (ML) model 142, a reference background image library 144, a vehicle detection ML model 158, a license plate detection ML model 159, a background matching module 152, a parking condition and compliance determination module 162, and character recognition module 164. The reference background image library 144 comprises reference background images 146 and metadata associated with the reference background images 148. The background matching module 152 comprises a background feature extractor module 154 and a geometric match validation module 156. The communication module 134 comprises hardware and software necessary to facilitate wireless communication between the computing device 130 and network 170. The wireless communication may be achieved through a wireless telecommunication network such as a 3G, 4G or 5G network, for example.

In some embodiments, the vehicle 110 may optionally comprise a GPS receiver 126 in communication with the image processing computing device 130. The GPS receiver 126 may transmit to the computing device 130 GPS Data corresponding to the vehicle 110. GPS data generated by GPS receivers comprises a quality indication of the GPS signal. For example GPS data presented in a 'SGPGGA'(Global Positioning System Fix Data) format stipulated by the National Marine Electronics Association (NMEA) 0183 standard comprises a GPS fix quality indicator, a horizontal dilution of precision indicator (HDOP), for example. The image processing computing device 130 may be configured to process the GPS data generated by the GPS receiver 126 and determine if the one or more GPS data quality indicators as received point to poor quality GPS signal data or GPS signal data of less than desired precision. In some embodiments, the GPS signal data with less than desired precision may be used by the background matching module 152 to narrow down the background images 146 for comparison providing a computational advantage by relatively narrowing down the number of images in the background matching module 152 for consideration.

In some embodiments, image processing computing device 130 may not be inside the vehicle 110 or on the vehicle 110 and may be located remote from the urban area where location determination is to be performed. For example, the image processing computing device 130 may be or form part of a remote server system, such as remote computer system 180. In such embodiments, the image processing computing device 130 may receive images captured by cameras 120a, 120b to perform the location determination remotely.

In some embodiments, the image processing computing device 130 may comprise a GPS correction signal generation module 167 provided in its memory 136. Signals generated by conventional GPS receivers are subject to various forms of errors. The errors may include errors due to obstruction of GPS signals by permanent structures such as buildings or trees, reflection of GPS signals by buildings, radio interference, solar storms, for example. One alternative for correction of GPS signal errors is to use a Differential Global Positioning System (DGPS). A DGPS uses a network of fixed ground-based reference stations to broadcast the difference between positions indicated by the GPS satellite system and known fixed positions of the ground-based reference stations. A GPS receiver configured to receive signals from a DGPS system uses the signals transmitted by the DGPS system to correct its calculated location.

In some embodiments, the GPS correction signal generation module 167 generates a GPS correction signal based on a location information determined based on one or more received images. The generated GPS correction signal may be transmitted by the image processing computing device 130 to other computing devices to correct their GPS locations in real time or near real time. Such other computing devices may include smartphones or autonomous vehicles or other computing devices that may use location data and can benefit from improved location accuracy.

The network 170 may include, for example, at least a portion of one or more networks having one or more nodes that transmit, receive, forward, generate, buffer, store, route, switch, process, or a combination thereof, etc. one or more messages, packets, signals, some combination thereof, or so forth. The network 170 may include, for example, one or more of: a wireless network, a wired network, an internet, an intranet, a public network, a packet-switched network, a circuit-switched network, an ad hoc network, an infrastructure network, a public-switched telephone network (PSTN), a cable network, a cellular network, a fiber optic network, some combination thereof, or so forth.

Vehicle 110 also comprises a power source 125 for supplying power to the camera 120 and the image processing computing device 130. The power source 125 may supply power generated by the vehicle 110's power supply systems or a battery or a combination of the two.

The parking indicator detection ML model 142, license plate detection ML model 159 and the vehicle detection ML model 158 perform object detection based on image processing techniques. Various machine learning techniques may be employed by the embodiments to perform object detection. In some embodiments, the parking indicator detection ML model 142, license plate detection ML model 159 and the vehicle detection ML model 158 may perform object detection using deep learning based neural networks. In some embodiments, object detection may be performed using the "you look only once" (YOLO) framework or a "single shot multibox detector" (SSD) based model for object detection. In some embodiments, the deep learning based frameworks for object detection may include: regions with convolutional neural networks (R-CNN), or fast region-based convolutional network method (Fast R-CNN), or a faster region-based convolutional network method (Faster R-CNN).

A CNN as implemented by some embodiments may comprise multiple layers of neurons that may differ from each other in structure and operation. A first layer of a CNN may be a convolution layer of neurons. The convolution layer of neurons performs the function of extracting features from an input image while preserving the spatial relationship between the pixels of the input image. The output of a convolution operation may include a feature map of the input image. The operation of convolution is performed using a filter or kernel matrix and the specific weights in the filter or kernel matrix are obtained or calibrated by training the CNN by the processes described subsequently.

After a convolution layer, the CNN in some embodiments implements a pooling layer or a rectified linear units (ReLU) layer or both. The pooling layer reduces the dimensionality of each feature map while retaining the most important feature information. The ReLU operation introduces non-linearity in the CNN, since most of the real-world data to be learned from the input images would be non-linear. A CNN may comprise multiple convolutional, ReLU and pooling layers wherein the output of an antecedent pooling layer may be fed as an input to a subsequent convolutional layer. This multitude of layers of neurons is a reason why CNNs are described as a deep learning algorithm or technique. The final one or more layers of a CNN may be a traditional multi-layer perceptron neural network that uses the high-level features extracted by the convolutional and pooling layers to produce outputs. The design of a CNN is inspired by the patterns and connectivity of neurons in the visual cortex of animals. This basis for design of CNN is one reason why a CNN may be chosen for performing the function of object detection in images.

The parking indicator detection ML model 142 is configured to detect parking indicators in images captured by camera 120. Parking indicators include parking signs, or licence plates on vehicles. Parking signs include any signage near parking areas that indicate any restrictions on conditions associated with the parking area. The conditions may include a maximum duration or parking permissible for a vehicle during a particular time period, applicability of any parking fees, any parking permit requirements in the parking area, or any other relevant parking conditions that vehicles in the parking area need to adhere to. A parking area may be an area adjoining a street designated for parking vehicles. A parking area may comprise one or more parking bays or slots, with one bay or slot intended for a single vehicle. Parking signs may define parking conditions for all bays in a parking area or a subset of bays in the parking area. Parking signs may also indicate the extent or boundaries of a parking area.

The parking indicator detection ML model 142 is trained to process images captured by the camera 120 to detect parking indicators. The training of the parking indicator detection ML model 142 may be based on a training dataset of images with parking indicators (ground truth objects) identified in each image in the training dataset. Using the training dataset, the parking indicator detection ML model 142 is trained by supervised learning methodologies such as backpropagation. The trained parking indicator detection ML model 142 identifies parking indicators in an input image and is also capable of isolating parts of an input image corresponding to a parking indicator. The trained parking indicator detection ML model 142 may also be capable of classifying various parking indicators into distinct categories such as a parking sign or a licence plate. Different cities may have different parking signs, and accordingly, the parking indicator detection ML model 142 may be trained to recognise the parking signs of a particular city, for example.

The vehicle detection ML model 158 uses similar object detection techniques as the parking indicator detection ML model 142 to identify target vehicles in images captured by the camera 120. Target vehicles may comprise any 2 wheeled vehicles or 4 wheeled vehicles or larger vehicles, such as trucks, to which parking conditions may apply. The vehicle detection ML model 158 is trained to detect one or more target vehicles in a captured image and identify a portion of the image corresponding to the identified vehicle.

The reference background image library 144 comprises reference background images 146 and background image metadata 148. Reference background images 146 include images that serve as references for the background matching module 152 during a process of matching images captured by camera 120 to determine location. Reference background image metadata 148 includes metadata regarding each reference background image. The metadata 148 may include location information associated with the reference background image. In some embodiments, the location information may comprise longitude coordinate information and latitude coordinate information. The metadata 148 may include parking conditions associated with the parking locations or areas in the vicinity of the location associated with each reference background image. The parking location may include a street name, a street number, a parking bay number, and a city name, for example.

In some embodiments, the background image metadata 148 may comprise information defining parking zones. A parking zone may be a continuous area adjacent to a street designated for parking with a common set of parking conditions. Background images 146 may comprise multiple images of a parking zone. Each parking zone may be defined by a parking zone start indicator, such as a sign or a post indicating the start of a parking zone. Similarly, the end of each parking zone may be designated by a sign or a post indicating the end of a parking zone. In some embodiments, the metadata 148 may comprise an indication that a specific background image 146 relates to the start of a parking zone or an end of a parking zone. In some embodiments, the background images 146 may also include background images beyond the defined parking zone and adjacent to the start and end of the parking zone. Inclusion of background images beyond the defined parking zone allows the estimation of location during parking monitoring beyond the defined parking zones.

The character recognition module 164 comprises program code that processes images or a portion of an image comprising characters to recognise the characters present in the image. Character recognition involves: pre-processing images to prepare them for recognition, and text recognition that may be performed by pattern matching or alternatively feature extraction followed by classification of extracted features to recognise text or characters.

The parking condition and compliance determination module 162 performs the function of determining parking conditions assessing compliance of vehicles to the determined parking conditions. In some embodiments, the parking conditions may be determined by processing portions of the captured images that correspond to parking signs detected by the parking indictor detection ML model 142 using the character recognition module 164. The character recognition module 164 may determine the characters present in a parking sign and the recognised characters may be processed by processor 132 executing the program code of the parking conditions determination module 162 to determine the parking conditions indicated by the parking sign. The determined parking conditions may be, for example: a limited maximum duration of parking for a particular vehicle, or no parking allowed during certain periods. In some embodiments, the parking conditions determination module 162 may determine parking conditions based on the location of a parking area or a parking bay in a parking area. The parking conditions may be stored as part of background image metadata 148 in the reference background image library 144. When a captured image of a parking location is matched with an image in the reference background image library 144, metadata associated with the matched reference image may be queried to obtain the parking conditions associated with the parking area in the captured image. The parking conditions and compliance determination module 162 may also determine compliance of a target vehicle to parking conditions based on information regarding the target vehicle. The information may include an outline of the target vehicle. The information may also include a timestamp at which the licence place corresponding to the target vehicle was first identified in the specific parking area.

The background matching module 152 performs the function of matching an image captured by the camera 120 with an image in the reference background image library 144. To efficiently perform background comparison, in some embodiments the background matching module 152 may incorporate an image retrieval and comparison process known as DELF (Deep Local Feature) that is based on attentive local feature descriptors suitable for large-scale image retrieval and comparison.

Before implementing system 100 for parking monitoring, a survey may be conducted of the various parking spaces in an urban area. The survey may include photographing parking areas, and mapping the photographs with the location they correspond to. The survey essentially populates the contents of the reference background image library 144. Photographs may be taken on each parking bay, or parts of a parking area. The need for specificity of the determined parking location during parking monitoring may govern the number of photographs required to cover a continuous parking area. For example, if the determined location needs to mapped to a specific parking bay, then a photograph of each parking bay may be taken to populate the reference background image library 144. If the determined location could be acceptably within a range of 10 meters, then a photograph may be taken at every 10 meters over a continuous parking area to populate the reference background image library 144. In some embodiments, the survey to gather reference background images may be conducted during various lighting conditions or weather conditions to enable determination of location despite changes in lighting or weather conditions.

After completion of the survey of the parking area, the background feature extractor module 154 may be trained to process captured images to extract background features or background features descriptors in the captured images. The background descriptors are an encoded representation of the background of a captured image. The background descriptors enable comparison of the background of various images using computational optimisation techniques such as a nearest neighbour search.

The background descriptors may correspond to regions or portions of an image that are permanent or stationary. The determined background descriptors may accordingly be used to distinguish between stationary and dynamic portions of an image corresponding to a location. For example, in an image of a bus stop with a billboard, the image regions of the billboard may be considered dynamic and the background feature extractor module 154 may be trained to disregard the portions or regions of an image that correspond to the billboard. In the same image of the bus stop, portions of the image corresponding to a sign or a permanent structure such as a post or a shelter can be extracted by the background feature extractor module 154 as a background descriptor for the image. Accordingly, the background feature extractor module 154 is trained to identify background descriptors in images that correspond to permanent or stationary structures providing an efficient and reliable basis for comparison with other images corresponding to the same location.

In some embodiments, the feature extractor module 154 may comprise CNNs trained to extract background feature descriptors from captured images. The CNNs may comprise an additional layer of neurons (attention determination layers) trained to determine attention indicators or weights for features in a captured image. Features corresponding to a persistent background may be given a high attention weight and features corresponding to non-persistent or transient background may be given a low attention weight, for example. The attention determination layer in essence helps the background feature extractor module 154 differentiate between persistent and transient parts of a captured image and assists the efficient comparison of the background of a captured image with the background of images in the reference background image library 144.

In some embodiments, the system 100 may perform parking surveillance in real time or in near real time. Since parking violation may be a very transient and time specific offence, capturing such violations as they occur may be essential for an effective parking condition enforcement strategy. In an urban area, a very large number of reference background images may be necessary to canvas the entire parking areas available to vehicles. In addition, the surveillance vehicle 110 may be driving around the urban area capturing images. Relatively little compute time (or computing resources) for performing background comparison may be available to enable real-time or near real time parking surveillance. The DELF process incorporated by the background matching module 152 enables an efficient comparison between a captured image and the images in the reference background library 144.

In some embodiments, the background feature extractor module 154 may identify more than one matching background image. This may be because of relative similarity of backgrounds. In such cases, the geometric match validation module 156 may assist in narrowing down to a single matched image. The geometric match validation module 156 may rely on homography testing processes to narrow down to a single matched reference background image. In some embodiments, the geometric match validation module 156 may rely on a random sample consensus (RANSAC) process to narrow down to a single matched reference background image.

The geometric match validation module 156 comprises program code to analyse two images and determine or identify one or more common visual features in the two images. For example, the geometric match validation module 156 may extract distinct visual features or shapes or curves from two images. An overlap between the corresponding distinct visual features or shapes or curves from each of the images may be determined to assess whether the two images may be considered to be a match and accordingly may be considered to correspond to a common location.

In some embodiments, the background matching module 152 may rely on a scale-invariant feature transform (SIFT) process to detect and describe local features in images to perform background matching. In some embodiments, the background matching module 152 may rely on a speeded up robust features (SURF) process to detect and describe local features in images to perform background matching.

Remote computer system 180 may be a system for managing actions in response to parking violations and managing contents of the reference background image library 144, for example deployed in a surveillance vehicle 110 or another computing device. Based on the parking condition non-compliance information received from the surveillance vehicle 110, the remote computer system 180 may support or take enforcement actions, such as imposition of fines or alerting authorities regarding the violation, for example.

The remote computer system 180 comprises at least one processor 174 in communication with a memory 172. In some embodiment, the memory 172 comprises program code to implement a background image annotation tool 149.

The background image annotation tool 149 comprises program code to implement a user interface for annotation of background images 146 and the management of the background image metadata 148. The background image annotation tool 149 allows the creation and management of various versions of the reference background image library 144. A version of the reference background image library 144 created on the remote computer system 180 may be transmitted to the image processing computing device 130 to perform the parking monitoring.

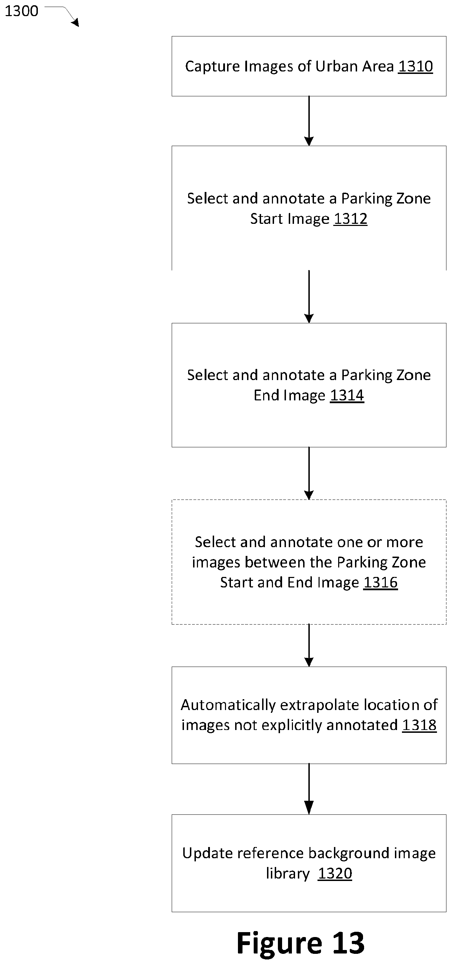

The background image annotation tool 149 comprises an annotation user interface module 192 that allows a user to review background images 146, annotate the background images 146 and create the background image metadata 148 through the annotation process. The background image annotation tool 149 comprises a location extrapolation module 194 that allows the extrapolation of locations for background images 146. Annotation and extrapolation using the background image annotation tool 149 is described with reference to Figures 13, 14 and 15.

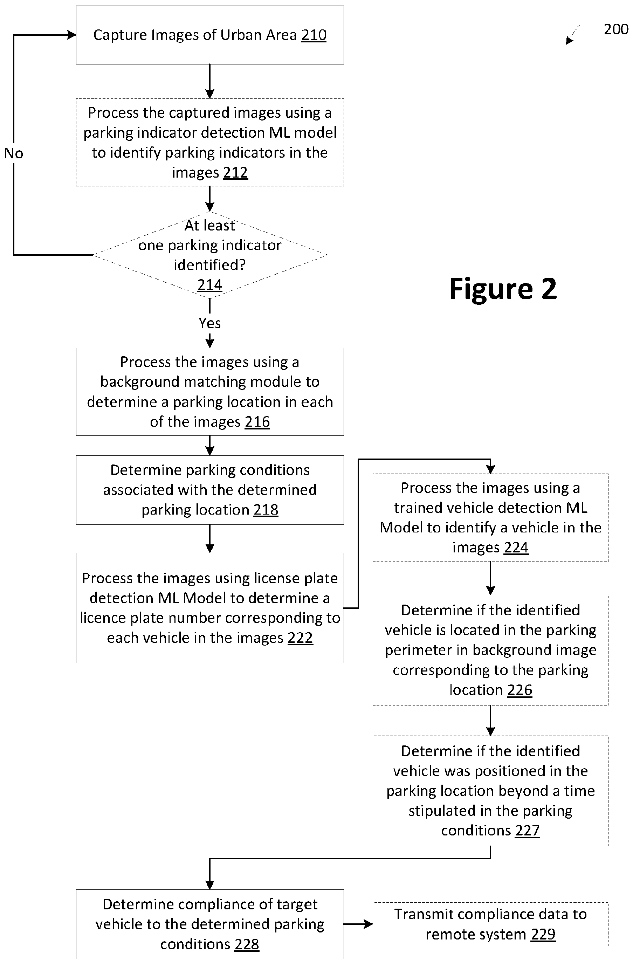

**Figure 2** is a flowchart of a process 200 for parking monitoring according to some embodiments. As a precondition to the operation of the parking monitoring process of Figure 2, a survey of the various parking areas in the relevant urban area is conducted and the reference background image library 144 is populated along with the relevant image metadata including location data and parking conditions, for example. The parking indicator detection ML model 142, vehicle detection ML model 158 and the background matching module 152 are trained on image data obtained from the relevant urban area being monitored.

At 210, camera 120 captures images of an urban area and makes the image available for processing to the processor 132. The images may be captured as the surveillance vehicle 110 moves through the urban area. Camera 120 may be directed towards the parking areas to get a good view of parked vehicles and any parking signs. In some embodiments with multiple cameras 120, images taken at different angles may be made available to the processor 132 for processing. The availability of images from different angles enables verification of the various object detection and background matching operations performed by the system 100.

At 212, the parking indicator detection ML model 142 processes the captured image to identify one or more parking indicators in the captured image. The parking indicator detection ML model 142 may return as output coordinates defining a bounding box around each parking indicator identified in a captured image. The parking indicator detection ML model 142 may also return as output the nature of the parking indicator, for example whether the parking indicator is a parking sign or a licence plate. In some embodiments, the parking indicator detection ML model 142 may identify a type of parking indicator, such as a parking indictor defining a time restriction for parking or a parking indictor signifying a tow away zone. At 214, if at least one parking indicator is determined in a captured image then the process proceeds to 216. If no parking indicators are detected, then the process continues at 210, which involves the surveillance vehicle continuing to capture images of the urban area as it moves. In some embodiments, steps 212 and 214 may be optional. In embodiments where steps 212 and 214 are optional, parking conditions associated with a location may be determined based on a location estimated by the background matching module 152 and by referring to parking condition data stored in the background image metadata 148 associated with the estimated location.

At 216, the captured image in which a parking indicator is identified is processed by the background matching module 152. The background matching module 152 compares the captured image with the images in the reference background image library 146 to identify a single matching reference background image. Based on the identified single reference background image, a parking location is determined by querying the background image metadata 148 associated with the single matching reference background image. The parking location may include a street name, a street number, a parking bay identifier or a parking zone identifier, for example.

In some embodiments, the camera 120 captures a stream of images as it moves through an urban area. The stream of images may be processed by the parking indicator ML model 142 to identify parking indicators in the several captured images in the stream. The parking indicators detected in the stream of images may be tracked through the stream of captured images using an object tracking image processing technique. Tracking identified objects in the stream of captured images allows deduplication of the identified parking indicators. Similarly, the stream of captured images may be used for background matching at 216. Using a stream of images at 212 and 216 may improve the accuracy of the parking monitoring process as potential errors across the stream of capture images may be cross checked and verified.

At 218, the parking condition and compliance determination module 162 determines the parking conditions associated with the parking location identified at 216. In some embodiments, the parking conditions may be determined by processing the identified parking indicators including parking signs using the character recognition module 164 to identify the character or text in the parking signs processing the character to determine parking conditions. For example, if a parking sign reads "1P 730AM-630PM" then the parking condition and compliance determination module 162 may determine that a vehicle may be parked in a parking spot for at most one hour between the time periods 7.30 am to 6.30 pm. In some embodiments, the character recognition module 164 may also read symbols such as arrow signs indicating the beginning or end of a parking area. The parking condition and compliance determination module 162 may interpret such symbols to determine an extent of the area to which the parking conditions apply.

In some embodiments, the parking conditions may be stored as background image metadata 148 mapped to a particular parking location. The parking conditions may include a parking perimeter associated with a parking location or a parking bay in a parking location. Some parking conditions may be verifiable instantaneously. For example, a vehicle parked in a no parking zone may be instantaneously deemed as being in violation of parking conditions. Other parking conditions, such as parking for a specific maximum duration may require more than one observation by the surveillance vehicle 110 of the same parking area over a period of time.

At 222, the captured image is processed by the license plate detection ML model 159 to detect the licence plate of a target vehicle. The licence plate detection ML model may identify a portion of the captured image corresponding to a license plate and it may invoke the character recognition module 164 to read the characters in a license plate. At 222, the process 200 may also record a time stamp associated with the detection of the license plate of the target vehicle. The time stamp may include a date, and time in a 12 hour or 24 hour time format and a time zone. The recorded timestamp may provide a reference to check compliance with time based parking conditions.

Steps 224, 226 and 227 are optional in some embodiments wherein the system 100 is configured to determine if a target vehicle is present in a parking perimeter defined with respect to a parking location. Steps 224, 226 and 227 are performed by the parking condition and compliance determination module. At 224, the vehicle detection ML model 158 detects a target vehicle in the captured image. Detection of the target vehicle may comprise detection of a portion of the captured image corresponding to the target vehicle, for example. Detection of the target vehicle may comprise detection of an outline corresponding to the target vehicle, for example. At 226, the parking conditions and compliance determination module 162 may retrieve a parking perimeter associated with the identified parking location and determine if the identified target vehicle is positioned within the parking perimeter. If the identified target vehicle is at least partially not positioned within the parking perimeter, then the parking conditions and compliance determination module 162 may identify a noncompliance to the determined parking conditions. The image processing technique of determining if the identified target vehicle is positioned within the parking perimeter may be referred to as polygon warping. Polygon warping may comprise calculation of a transformation matrix to superimpose a parking perimeter on a capture image. The transformation matrix maps a pixel in the captured image with a pixel in the matched reference background image. The matrix transformation may include procrustes analysis, or perspective transformation, for example.

At 227, the parking conditions and compliance determination module 162 may query previous observations of the target vehicle at the same parking location. If time restricted parking conditions apply to the parking location, then the parking conditions and compliance determination module 162 based on previous observations may estimate the duration since the first observation of the target vehicle at the parking location. Based on the calculated duration since the first observation, the parking conditions and compliance determination module 162 may determine if the target vehicle is in compliance with any time based parking conditions.

At 228, the parking conditions and compliance determination module 162 determines the compliance of the target vehicle to the parking conditions determined at 218. Determination of compliance at 228 may be based on the license plate detected at 222, and any previous observations of the same licence plate at the same location. Determination of compliance at 228 may also be based on the output of any one or more of steps 224, 226 and 227. Determination of compliance at 228 may result in a non-compliance determination, in which case the parking condition and compliance determination module 162 generates a non-compliance outcome, for example in the form of a flag, object or packet for remote or local transmission.

At 229, the computing device 130 transmits the outcome of the compliance determination at 228 to the remote computer system 180. If a non-compliance determination is made at 228, the outcome transmission may include one or more captured images showing con-compliance, the license plate number of the target vehicles, the time stamp(s) at which the target vehicle was detected and the parking condition(s) that the target vehicle was in violation of. The non-compliance outcome transmission may include sufficient evidentiary details to allow sanctions for noncompliance with parking conditions to be imposed by a relevant authority, for example. The non-compliance outcome transmission may occur immediately after a non-compliance is determined to enforce the parking conditions in real-time or in near real-time. For example, the non-compliance outcome transmission may be routed to a local client device carried by a nearby compliance officer so that the officer can take an appropriate enforcement action in relation to the vehicle. Alternatively or in addition, the non-compliance outcome transmission may be routed to a server device, such as remote computer system 180 via network 170, in order for that server device to record the non-compliance and issue a suitable notification and/or fine to the registered owner of the non-compliant vehicle.

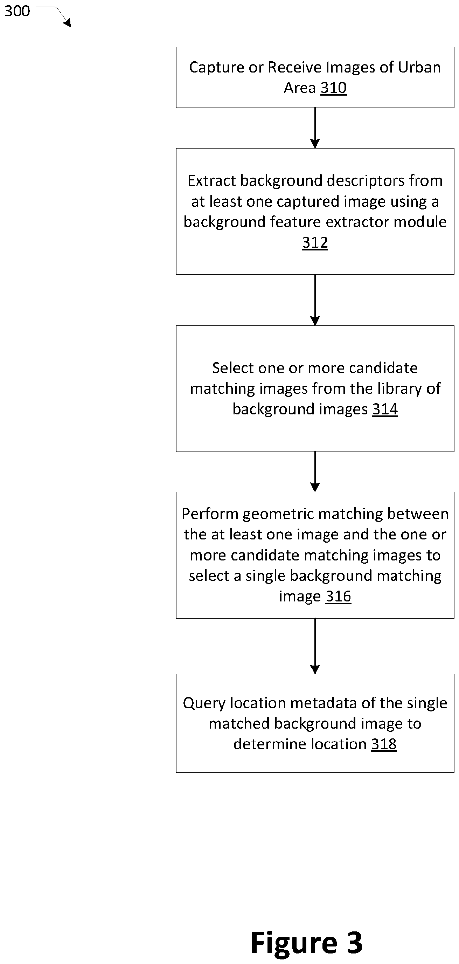

**Figure 3** is a flowchart of a process for location determination 300 according to some embodiments. In some embodiments, the process of location determination 300 may be performed by the image processing computing device 130 in communication with the camera 120a mounted on the surveillance vehicle 110. In some embodiments, the process of location determination 300 may be performed by a computing device 130 not provided in the surveillance vehicle 110 and configured to receive an input image or have access to an input image for location determination.

At 310, the camera 120 mounted on the vehicle 110 captures images of the urban area and makes the images available to the processor 132. In some embodiments, step 310 may comprise the computing device 130 not positioned in the surveillance vehicle receiving captured images of the urban area from a remote computing device or a remote camera 120.

At 312, the processor 132 processes a captured image to determine background descriptors associated with the image using the background feature extractor module 154. The background descriptors are in essence the persistent distinguishing aspects of the captured image that uniquely identify the background present in the captured image. In some embodiments, the background descriptors may be extracted by applying a fully convolutional network (FCN) constructed by using the feature extraction layers of a convolutional neural network (CNN) trained with a classification loss. The background feature extractor module 154 may comprise a classifier with attention parameters to explicitly measure relevance of background descriptors and it may be trained to distinguish between persistent background features and transient background features. Persistent background features may include distinctive parts of a building in the background or a permanent light post or bollard, for example. Transient background features may include billboards or hoarding that are subject to change, for example. As an output of step 312, a set of background descriptors or features are obtained for the captured image. The background descriptors or features may be represented in the form of a vector or matrix. As a result of step 312, the captured image (that may be a high resolution image) may be transformed into a compressed or succinct vector or matrix of relevant background descriptors or features.

As the number of images in the reference background image library 144 can be quite large (for example 10,000 to 1 million images), use of conventional image comparison techniques may not provide a substantially accurate or a substantially computationally efficient approach for comparing the image captured or received at 310 with each of the images in the reference background image library 144. The background descriptors extracted at step 312 represented as a succinct vector or matrix of relevant background descriptors or features in the captured provide a computationally efficient basis for comparison with the images in the reference background image library 144. The background descriptors extracted at step 312 provide an effective encoding of a subset of features relating to persistent or stationary background features while disregarding or excluding or deprioritising features in the captured image not relevant to the comparison with images in the reference background image library 144. Features in the captured image not relevant to comparison with images in the reference background image library 144 may include image portions or features relating to individuals, billboards or dynamic signage, for example.

At 314, a search is performed to select one or more candidate matching images from the library of reference background images 144. In some embodiments, the search may be a nearest neighbour search implemented by a combination of KD-tree and product quantisation (PQ). The search is performed using the pre-determined background descriptors or features of the images in the library of reference background images 144. An output of 314 is a set of candidate reference background images that are a potential match for the captured image. The points of the captured image that correspond to points in the candidate matching images may be referred to as key points. The number of key points identified between a captured image and an image in the reference background image library 144 may be considered as a factor in determining the similarity of the background in the two images.

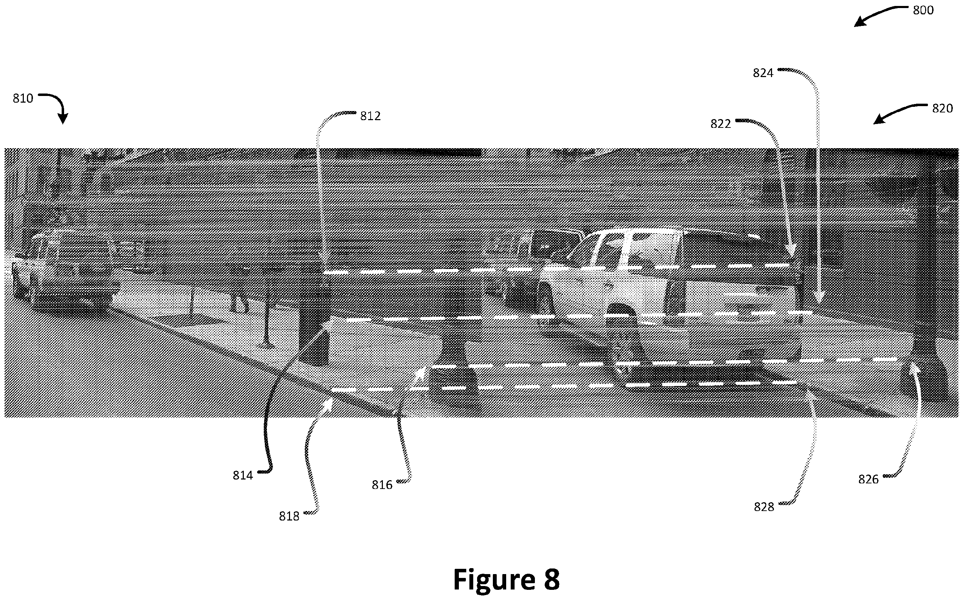

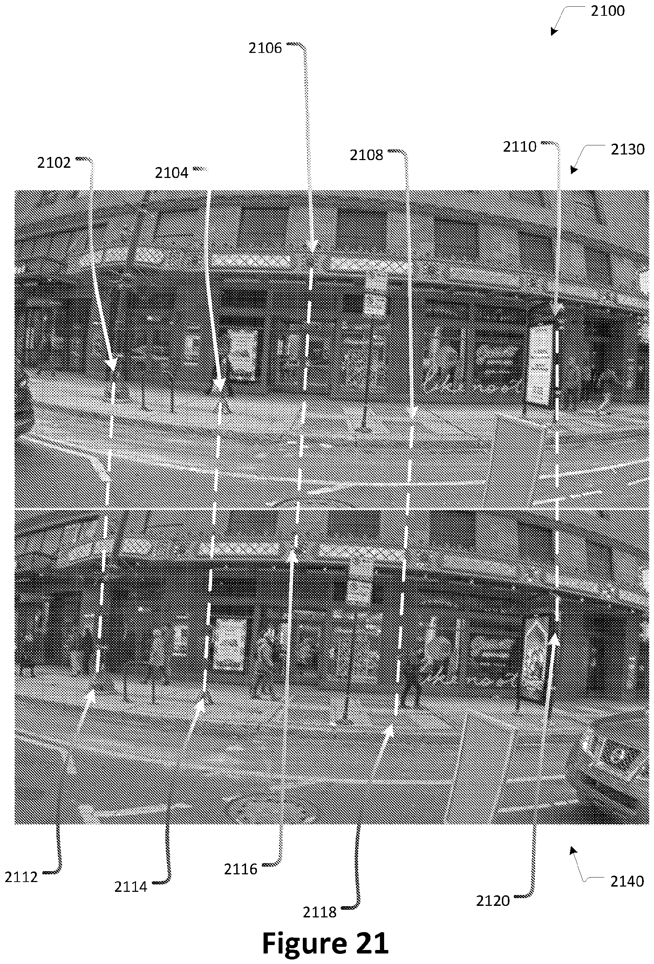

At 316, geometric matching or verification is performed between the captured image and the candidate reference background images. Geometric verification includes a more detailed comparison between two images to assess if they share a common background. With the reduced number of candidate reference background images obtained at step 314, the geometric matching step is not as computationally intensive in comparison to performing geometric matching across the entire reference background image library 144. In some embodiments, the geometric verification may be performed using a random sample consensus (RANSAC). The outcome of 316 may be the confirmation of a single candidate reference image as a match for the capture image. As part of the geometric match validation, a matching number of points of interest may be identified between the captured image and each of the candidate reference background images. Each point of interest in the captured image may correspond to a stationary or permanent background in the image. The number of matching points of interest between two images may be used as a metric to quantify a degree to which the two images match. For example, images A and B with 30 matching points of interest may be a better match than images A and C with 10 matching points of interest. The candidate reference background image with the highest number of matching points of interest may be considered the closest match to the captured image. A point of interest match threshold of the minimum number of matching points may be used to establish a minimum degree of geometric matching. If no candidate reference background image comprise matching points of interest above the point of interest match threshold, then the captured image may be considered as not matched. In some embodiments, the point of interest match threshold may be 5 points, 10 points, 15 points, 20 points, or 25 points, for example. Figures 8 and 21 illustrate examples of matching points of interest between two images. At 318, the location of the vehicle may be determined by querying the location metadata associated with the matched reference background image.

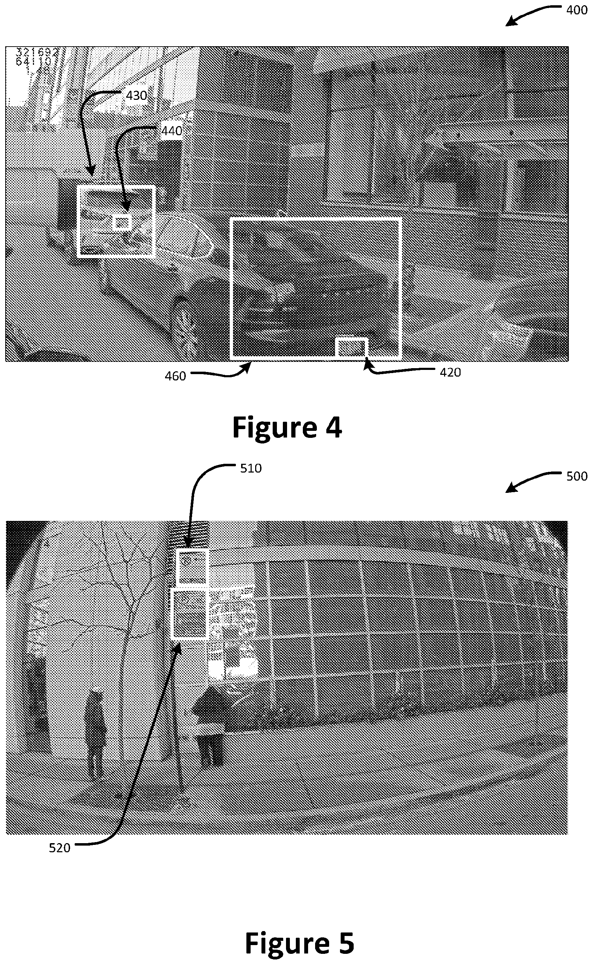

**Figure 4** is an example of a captured image 400 showing identified parking indicators after step 212 of flowchart 200. The identified parking indicators include license plates 440 and 420. Image 400 also illustrates identified vehicles 410 and 430. The vehicles and license plates are surrounded by bounding boxes indicating the portions of the captured image that correspond to the vehicles and license plates respectively.

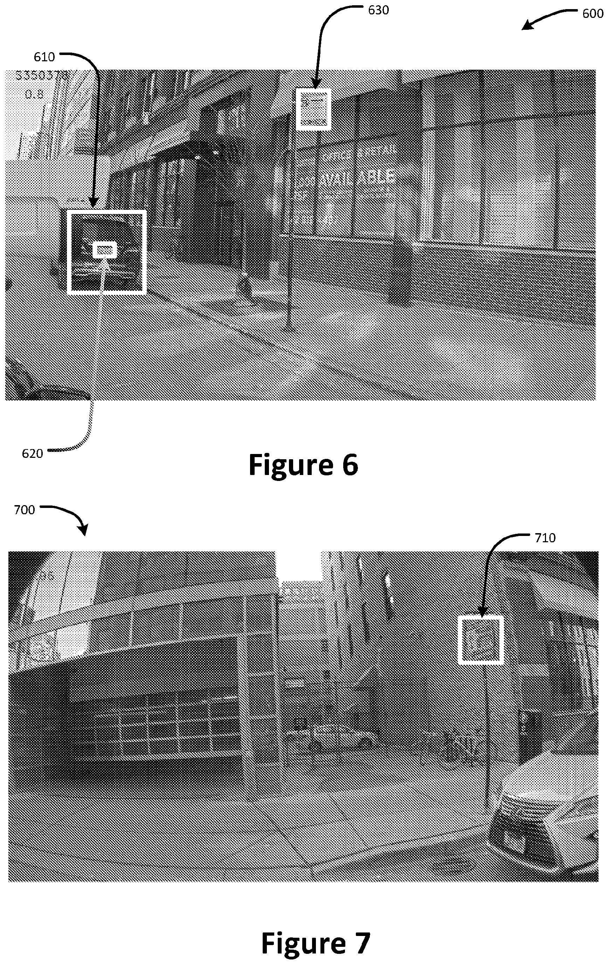

**Figure 5** is an example of a captured image 500 showing identified parking indicators after step 212 of flowchart 200. In image 500, parking indicators 510 and 520 corresponding to parking signs have been identified by the parking indicator detection ML model 142. Similarly, **Figure 6** is an example of a captured image 600 wherein parking indicators 630, 620 and vehicle 610 have been identified by the parking indicator detection ML model 142 and vehicle detection ML model 158 respectively. **Figure 7** is an example of a captured image 700 in which parking indicator 710 has been identified by the parking indicator detection ML model 142.

**Figure 8** is an example image 800 illustrating a stage in the process of background matching performed by the background matching module 152. Image 800 comprises two parts, image 810 and image 820. Image 810 is a reference background image stored in the reference background image library 144. Image 820 is an image captured by camera 120 during the course of parking surveillance in an urban area. The various parts of a persistent background in image 820 provide a basis for comparison with the image 810 and enable the determination of a parking location based on the location metadata associated with reference image 810. For example, feature 816 (part of a light post) in image 810 corresponds to the identical feature 826 in the captured image 820. Feature 812 (part of parking sign post) in image 810 corresponds to the identical feature 822 in the captured image 820. Feature 814 (part of building in the background) in image 810 corresponds to the identical feature 824 in the captured image 820. Feature 818 (part of roadside curb) in image 810 corresponds to the identical feature 828 in the captured image 820.

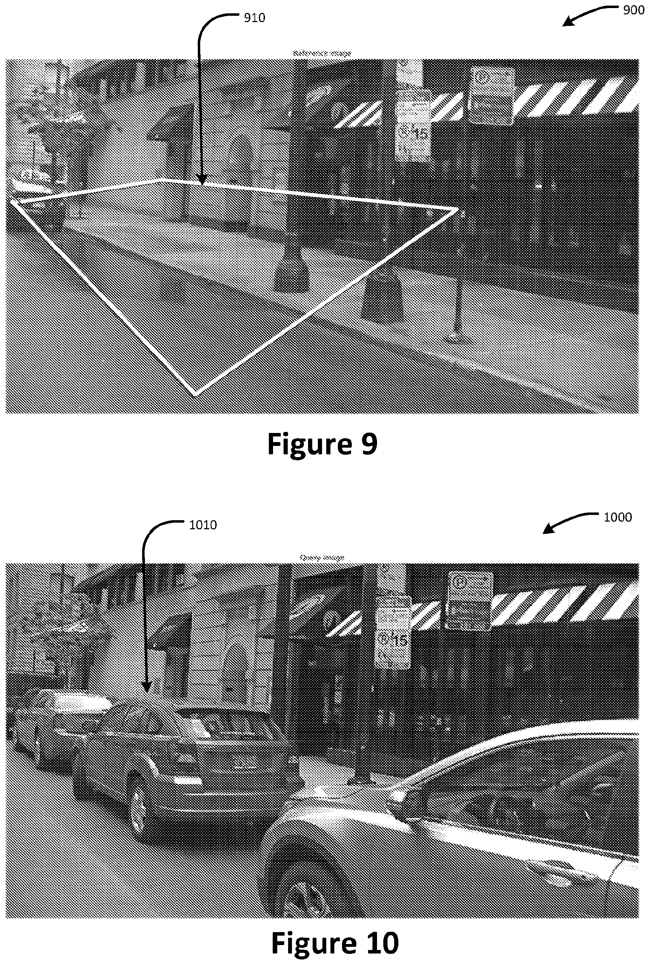

**Figure 9** is an example of a reference background image 900. Metadata of the reference background image 900 also comprises a perimeter 910 that defines an appropriate area for parking.

**Figure 10** is an example of a captured image 1000 in the location corresponding to the reference image 900. Figure 10 illustrates a target vehicle 1010.

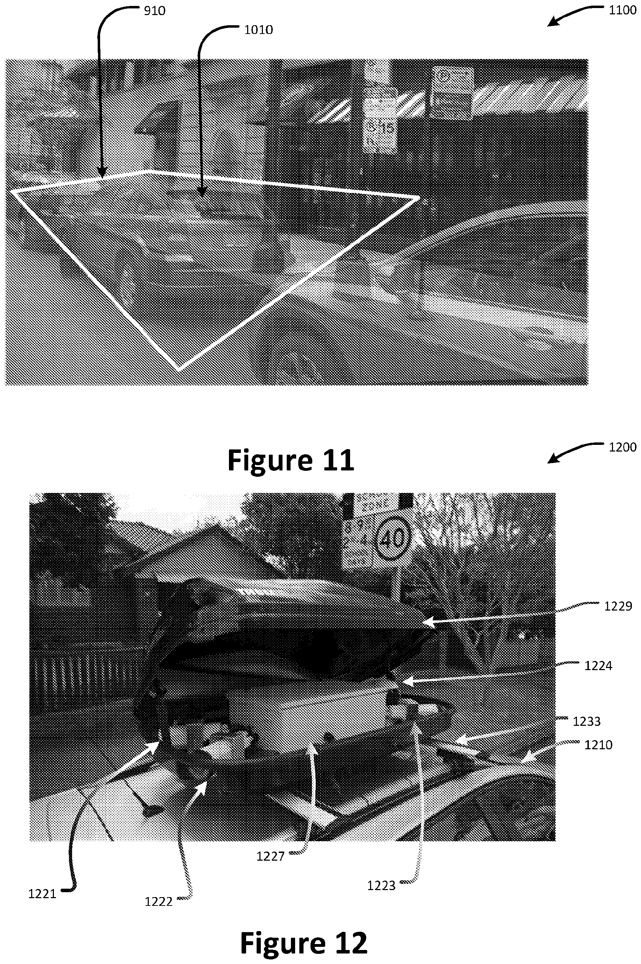

**Figure 11** is an image 1100 obtained by superimposing the reference image 900 on the captured image 1000. As is discernible from image 1100, the superimposing allows the verification by the parking condition and compliance determination module 162 of the compliance of the vehicle 1010 with the parking condition of the parking perimeter 910.

**Figure 12** is an image of part of a surveillance vehicle 1210 illustrating a vehicle-mounted system comprising cameras 120 according to some embodiments. The surveillance vehicle 1210 of figure 12 has 4 cameras 1221, 1222, 1223, and 1224, for example, all of which are provided in a secure external housing 1229. In other embodiments, 6 or 8 or more cameras may be mounted in the external housing 1229. External housing 1229 may have a generally weatherised hard shell exterior that defines multiple imaging windows (or imaging apertures) at spaced locations around a lower periphery of the external housing 1229. Each of the cameras 120 (e.g. cameras 1221, 1222, 1223, 1224) is positioned to capture images of different areas around the vehicle 1210 through a respective imaging window of the external housing 1229. Two cameras face the front of the vehicle and two cameras face the rear of the vehicle, for example. The cameras are appropriately angled to get the best angle of vision towards parking areas by the side of the street on which the surveillance vehicle 1210 could drive.

The vehicle 1210 also comprises a computer housing 1227 inside which the computing device 130 may be located. The computer housing 1227 is disposed inside the secure external housing 1229. The computer housing 1227 and cameras 120 are protected by the secure external housing 1229, which generally encloses the computer housing 1227 and cameras 120. Secure external housing 1229 and computer housing 1227 may be weatherproof to secure and protect the operation of the cameras 120 and the computing device 110 from tampering and in unfavourable weather conditions, such as during rain or snow. An internal cavity of the secure external housing 1229 may be manually lockable and openable for easy access to update or replace the various components in the secure external housing 1229. An internal cavity of the computer housing 1227 may be manually lockable and openable for easy access to update or replace the various computing components in the computer housing 1227. The secure external housing 1229 may be fixed on the vehicle 1210 using one or more clamps to a roof rack 1233, for example.

In Figure 12, cameras 120 point at an angle of approximately 45 degrees to the direction of travel (front and rear directions) of the vehicle 1210. In some embodiments, the camera 120 may point at an angle of approximately 60 degree or 90 degree to the direction of travel of vehicle 1210. Multiple cameras 120 arranged to cover different fields of view allow the capture of images of a parking location from different perspectives. Parking locations may be subjected to various kinds of obfuscation by vehicles and obtaining images from different angles allows the comparison with the images in the reference background image library 144. Using multiple cameras 120 to perform background matching improves the accuracy and reliability of the background matching module 152 by introducing redundancies and enabling verification of matching using images captured from different perspectives.

**Figure 13** is a flowchart of a process for image annotation 1300 according to some embodiments. The process for image annotation 1300 may be performed using the background image annotation tool 149. The process of image annotation 1300 allows the creation of the reference background image library 144, which forms the basis of location estimation by the image processing computing device 130. Annotation information generated through the process 1300 forms part of the background image metadata 148.

At 1310, images of the area where the parking monitoring is to be performed are captured. The images may be captured using a camera mounted on a vehicle driven around the area where the parking monitoring is to be performed. The area may include a large urban area extending to several or tens of square kilometres with parking areas located at intervals along, or extending along, lengths of several kilometres, for example. Step 1310 involves surveying the entire urban area where parking monitoring is to be performed. Images are captured by the vehicle 110 in a sequence defined by the direction of motion of the vehicle 110 as it captures the images. Sequence information associated with the captured images is retained to assist the subsequent steps of annotation.

Parking zones in urban areas are often defined by signs or posts or indicators located adjacent to the parking zone or parking area on the sidewalk. The signs or posts may indicate a start or an end of a parking zone, thereby demarking the beginning or end of a zone. Specific parking conditions may be associated with a parking zone. For the purpose of parking monitoring, determination of a location as inside or outside a parking zone allows the assessment of compliance of vehicles to the parking conditions.

At 1312, an image corresponding to the start of a parking zone is annotated using the annotation user interface 192. The annotation comprises assigning a location to the image corresponding to the start of the parking zone and identifying that location as the start of a parking zone. The location may be assigned by indicating longitude and latitude coordinates of the location corresponding to the start of the parking zone.

Similarly at 1314, an image corresponding to the end of a parking zone is annotated using the annotation user interface 192. The annotation comprises assigning a location to the image corresponding to the end of the parking zone and identifying that location as the end of a parking zone. The location may be assigned by indicating longitude and latitude coordinates of the location corresponding to the end of the parking zone.

An image (or plurality of images) corresponding to a location of the start of a parking zone and another image (or plurality of images) corresponding to a location of the end of a parking zone may together define an extent of a specific parking zone with its specific parking conditions. In some embodiments, the defined parking zone may correspond to official parking zones defined by municipalities and the annotation process may comprise designation of a municipal parking zone code to the defined parking zone. The designation of a municipal parking zone code may allow extraction of parking conditions associated with the defined parking zone from a municipal parking conditions database remote to the image processing computing device 130, for example.

Since the images captured at 1310 comprise sequence information, by identifying and annotating the start and end of a parking zone, the images between the images associated with the start and end of a parking zone may be automatically assigned to the parking zone defined by the start and end of the parking zone. In some embodiments, the assignment of the images to a defined parking zone may be assisted by annotation of one or more images sequenced between the images defining the start and end of a parking zone. Some parking zones may extend through, across or around street corners, and it may be advantageous to annotate images corresponding to street corners to assist the automatic extrapolation or allocation of images in a sequence to a defined parking zone. At optional step 1316, images sequenced between the image corresponding to the start and end of a parking zone may be annotated. The annotation may involve assignment of the image to a defined parking zone and assignment of a location to the image.

At 1318, the location extrapolation module 194 processes the annotations at steps 1312, 1314 and 1316 to automatically annotate the sequence of images between the images corresponding to the start and end of the defined parking zone. The automatic annotation may involve automatic allocation of extrapolated locations to the images sequenced between the images corresponding to the start and end of a parking zone. In some embodiments, the automatic annotation may involve calculation of a distance between the locations corresponding to the start and end of a parking zone, division of the distance by the number of images sequenced between the start and end of the parking zone and an incremental allocation of location coordinates to each image sequenced between the start and end of a parking zone.

For example, if the distance between the start and end of a parking zone is 9m, and there are 8 images between the start and end of the parking zone, then each image may be assigned a location separated by 1m on a straight line defined by the locations corresponding to the start and end of a parking zone. In embodiments where a parking zone extends through a street corner, the images annotated at 1316 corresponding to a street corner may assist the location extrapolation process. In some embodiments, the location extrapolation module 194 may rely on a publicly available street routing Application Programming Interface (API) such as the Google^{™} Roads API to assist the automatic extrapolation of location information based on the location information associated with the start and end of a parking zone.

Through the steps 1312 and 1318, the sequence of images captured at 1310 are annotated by assignment of a location and a parking zone. At 1320, the annotated images are included in the reference background image library 144 to enable location estimation on the basis of the annotation information generated through the steps 1312 and 1318. In embodiments where process 1300 is performed on a computer system remote to the image processing computing device 130, the annotated images may be transmitted to the image processing computing device 130 along with the annotation information for inclusion in the background image metadata 148.

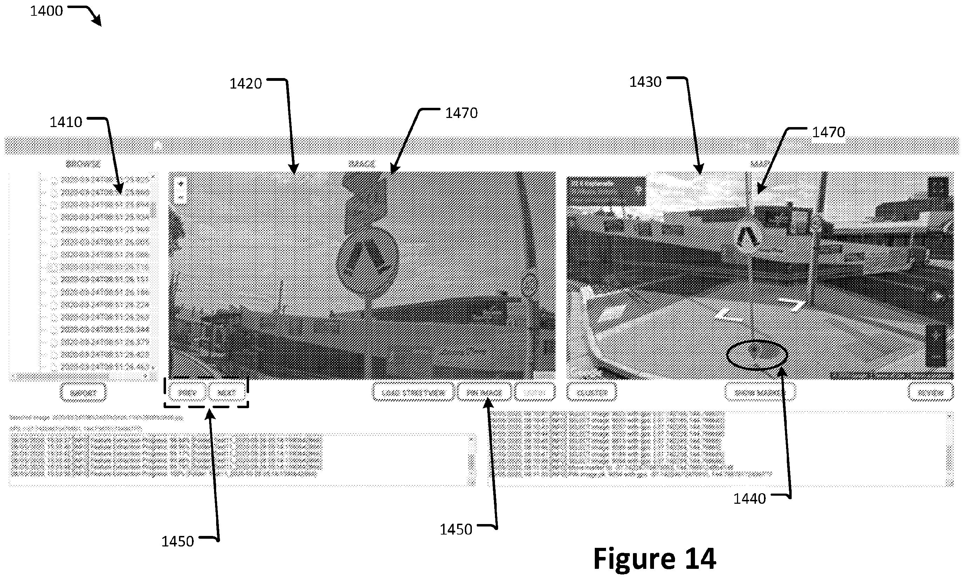

**Figure 14** illustrates a screenshot 1400 of an image annotation user interface 192 according to some embodiments. A panel 1410 in the user interface lists a series of files names of a sequence of images for annotation. Clicking on an individual file name in panel 1410 presents the image in panel 1420. Panel 1430 illustrates a Google^{™} street view interface. The Google^{™} street view interface 1430 provides an efficient mechanism for annotation of a location of the mage presented in panel 1420. In alternative embodiments, other similar mechanisms for location annotation may be used. The Google^{™} street view interface of panel 1420 is clickable and navigable to obtain a desirable location to annotate the image in panel 1420. Clicking on a specific part of panel 1430 drops a pin on the Google^{™} street view location and retrieves the coordinates associated with the location where a pin is dropped. The retrieved location may comprise longitude information and latitude information with relatively high accuracy. After clicking on the panel 1430 to drop a pin to select a location, the button 1450 may be clicked to annotate a selected image to a location selected by dropping a pin in panel 1430. Buttons 1450 may by clicked to navigate through the various images and annotate them. As discussed in relation to process 1300 of Figure 13, it is not necessary to annotate each image. With annotations indicating the start and end of a parking zone, it may be possible to extrapolate the locations of the rest of the images using the sequence information and publicly available information regarding the layout of roads such as the Google^{™} Roads API.

In some embodiments, location annotation may rely on common stationary or permanent structures visible in both the Google^{™} street view panel 1430 and the image in panel 1420. As illustrated in screenshot 1400, the image in panel 1420 and the Google^{™} street view location in panel 1430 have a post 1470. It is advantageous to annotate locations using a base of a permanent structure such as the post 1470. As illustrated in screenshot 1400, a marker 1440 for annotation is positioned at the base or bottom of the post 1470 at sidewalk or footpath level. Positioning markers for annotation at the bottom of permanent structures such as posts improves the efficiency of automatic extrapolation of location because conventionally permanent structures such as posts are located at a relatively uniform distance from the street. Since permanent structures are located at a relatively uniform distance from the street, using the foot or base of such permanent structures for annotation provides a more systematic and consistent basis for annotation.

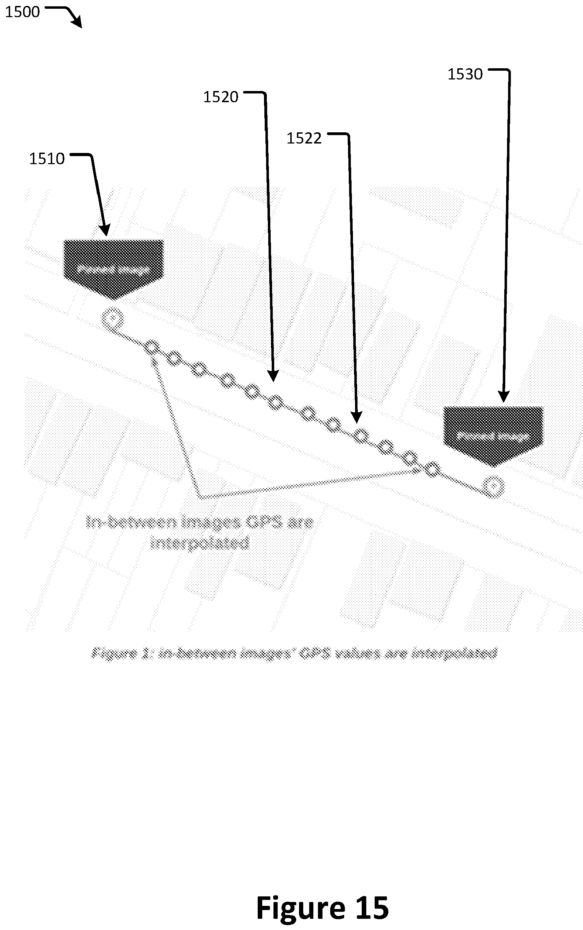

**Figure 15** is an image 1500 illustrating an outcome of automatic location extrapolation according to some embodiments. Image 1500 is a map corresponding to an area where image annotation has been performed according to the process 1300 of Figure 13. Markers 1510 and 1530 correspond to locations that have been identified as a start of a parking zone and an end of a parking zone respectively. Markers 1520 and 1522 correspond to locations that have been automatically assigned to images based on an extrapolation of locations 1510 and 1530 corresponding to the start and end of a parking zone.

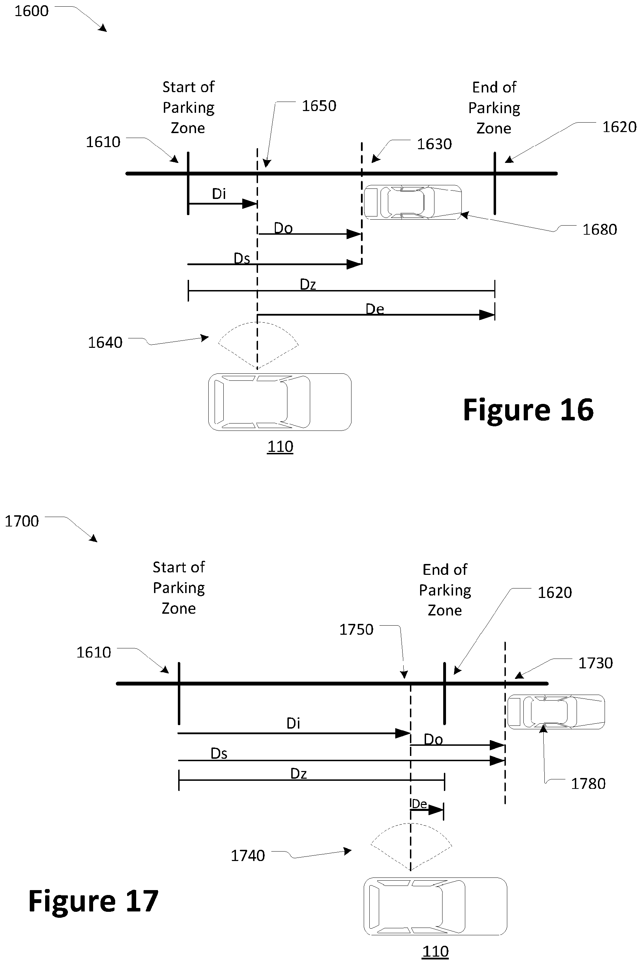

**Figure 16** is a schematic diagram 1600 illustrating some aspects of parking monitoring according to some embodiments. Diagram 1600 illustrates a target vehicle 1680 and the surveillance vehicle 110. The target vehicle 1680 is located in a parking zone defined by a parking zone start location 1610 and a parking zone end location 1620. The surveillance vehicle 110 has the camera 120 mounted on it which has a line of sight illustrated by 1640. Using the image captured by camera 120, a location coordinate corresponding to point 1650 is determined using step 216 of flowchart 200 of Figure 2. Using the determined location information of point 1650, the image processing computing device 130 is able to retrieve the coordinates corresponding to the locations 1610 and 1620. Location 1610 corresponds to the start of a parking zone and location 1620 corresponds to an end of the parking zone. The coordinates corresponding to the locations 1610 and 1620 may be stored in the background image metadata 148 of the reference background image library 144.

Using the coordinates of points 1610 and 1650, a distance Di (distance between start of parking zone and the identified location) is determined by the parking compliance determination module 162. Similarly, a distance De (distance between end of parking zone and the identified location) may be determined using coordinates of points 1650 and 1620. In the illustrated position, the image processing computing device 130 also determines a licence plate associated with the target vehicle 1680 using the licence plate detection machine learning model 159. A distance Do (offset distance) is a predetermined offset distance between a location corresponding to the line of sight

1640 and a determined licence plate of the target vehicle 1680. The Do value may depend on the angle at which the camera 120 or cameras 120a, 120b are positioned; and the conditions of the urban environment itself such as the size of the parking lots. The offset distance is predetermined based on experimentation in an urban area. A determined offset distance is fixed for an urban area or a subset of a region within an urban area with common parking conditions.

In some embodiments, camera 120a may be positioned at an angle of 90 degrees to the direction of motion of the surveillance vehicle 110 and may be pointed towards the adjacent sidewalk; and camera 120b may be positioned at an angle of 45 degrees to the direction of motion. In such embodiments, images from camera 120a may be used for location estimation and images from camera 120b may be used for licence plate detection. In such embodiments, the offset distance (Do) may range from 3m to 8m, for example.

A distance (Ds) of the target vehicle 1680 from the start of the parking zone (1610) may be determined by adding Di with Do as illustrated in the Figure 16. The total length of the parking zone (Dz) may be determined by determining the distance between 1620 and 1610. If Ds < Dz, then the target vehicle 1680 may be considered to be parked in the identified parking zone. If Ds > Dz, then the target vehicle 1680 may be considered to be parked outside the parking zone.

**Figure 17** is another schematic diagram 1700 illustrating some aspects of parking monitoring according to some embodiments. Diagram 1700 illustrates the parking zone of Figure 16 defined by the points 1610 and 1620. The reference background image library 144 comprises reference images not just from within the parking zone but also reference images outside of the parking zone to allow the surveillance vehicle 110 to determine its location even when the line of sight 1740 of camera 120 is directed to an area outside of a parking zone.

In the schematic diagram 1700, the line of sight of camera 120a is directed to location 1750. Using the image captured by the camera 120a, coordinates of the location 1750 may be determined by the background matching module 152. At the same time, a licence plate corresponding to the target vehicle 1780 may be detected by the image processing computing device 130 using the licence plate detection machine learning model 159. Based on the determined location coordinates of location 1750, the coordinates of the parking zone start location 1610 and the parking zone end location 1620 may be determined by the image processing computing device 130 by referring to the background image metadata 148. With the coordinates of points 1610, 1620 and 1750 determined, the distance Di between 1610 and 1750 is calculated. As discussed with respect to Figure 16, the offset distance Do is pre-determined. The sum Di+Do is determined to obtain a location 1730 corresponding to the target vehicle 1780. Based on the determined location 1730, a distance Ds between the target vehicle 1780 and start of the parking zone 1610 is determined. Similar to Figure 16, distance Dz between the start and end of the parking zone is determined. If Ds>Dz, then the target vehicle 1780 may be considered to be positioned outside the parking zone. If Ds<Dz, then the target vehicle 1780 may be considered to be parked inside the parking zone. As illustrated in Figure 17, Ds>Dz. Accordingly, the target vehicle 1780 is determined to be positioned outside the parking zone.

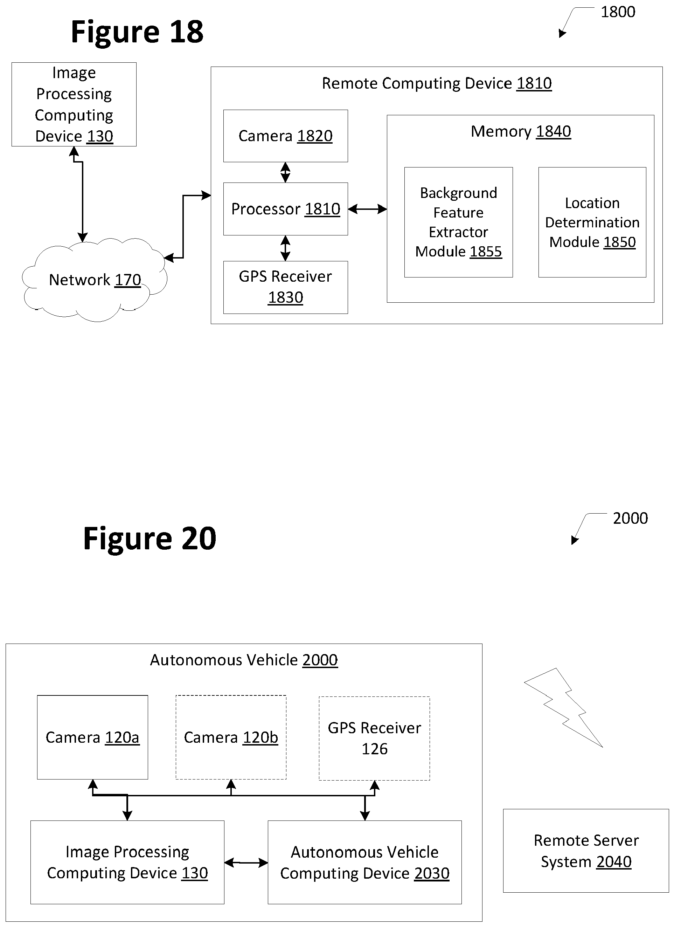

**Figure 18** illustrates a block diagram of a system 1800 for location determination according to some embodiments. The system 1800 is configured to receive an input image and GPS location data from a remote computing device 1810. The remote computing device 1810 may be a handheld computing device, such as a smartphone, a tablet device or another portable computing device that uses GPS location data. The remote computing device 1810 may include or form part of an on-board computer system of a vehicle, such as an autonomous passenger or work vehicle, for example. In response to the input image and the GPS location data, the image processing computing device 130 is configured to generate a GPS correction signal and transmit the GPS correction signal to the remote computing device 1810. The remote computing device 1810 comprises at least one processor 1810 in communication with a memory 1840. The remote computing device 1810 also comprises a camera 1820 and a GPS receiver 1830. The memory 1840 comprises computer program code to implement a location determination module 1850 and in some embodiments a background feature extractor module 1855.

The location determination module 1850 is configured to process the GPS correction signal received from the image processing computing device 130 and determine a corrected location. The remote computing device 1810 may be a smartphone or a computing device used for a location survey, for example. In environments with limited or inaccurate access to GPS data, the remote computing device 1810 captures one or more images of its location using camera 1820 and transmits the one or more images to the image processing computing device 130 over the network 170. In some embodiments, the remote computing device 1810 may process the captured images using the background feature extractor module 1855 to extract a vector or matrix of features corresponding to persistent or stationary background objects in each of the captured images. The use of the vector or matrix of features corresponding to persistent or stationary background objects in the captured images is a way of compressing the image data to a size less than the size of the originally captured images. Instead of transmitting the full data of the captured images to the image processing computing device 130, the remote computing device 1810 may transmit the captured image data vector or matrix of features corresponding to persistent or stationary background objects in the captured images to economise the amount of data transmitted while retaining sufficiently detailed data regarding persistent or stationary background objects in the captured image.

The remote computing device 1810 may also transmit the GPS data obtained from the GPS receiver 1830 to the image processing computing device 130. In response to the transmitted one or more images, the image processing may return to the remote computing device 1810 location information corresponding to the one or more images. In some embodiments, the image processing computing device 130 may also return a GPS correction signal to the remote computing device 1810.

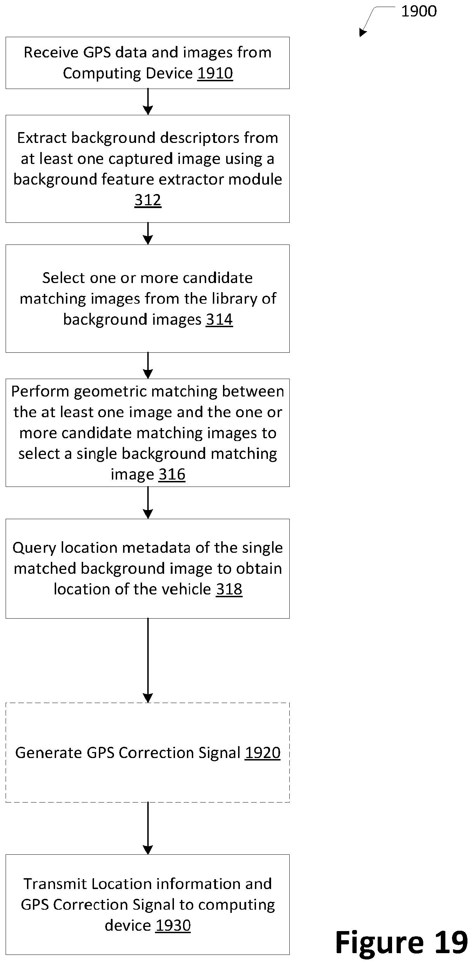

**Figure 19** illustrates a flowchart of a method 1900 of location determination performed by the system 1800 of Figure 18. The method 1900 includes the steps 312, 314, 316, and 318 of method 300 of Figure 3. At step 1910, the image processing computing device 130 receives one or more images (or a vector or matrix of features corresponding to persistent or stationary background objects for each captured image) from the remote computing device 1810. At step 1910, the image processing computing device 130 may also receive GPS data from the remote computing device 1810. The received GPS data may be poor quality GPS data obtained by the remote computing device 1810 that the computing device 1810 is seeking to correct.

At step 312, as described with reference to Figure 3, the image processing computing device 130 extracts background descriptors from one or more images received at step 1910. The extracted background descriptors may be represented in the form of a vector or a matrix. At step 314, one or more candidate matching images are selected from the reference background image library 144 by the background matching module 152. At step 316, the geometric match validation module 156 performs a geometric match validation and determines a single matching reference background image from the background image library 144. At 318, the location metadata of the matching reference background image is checked to obtain location information corresponding to the one or more images received at step 1910.

In some embodiments, an optional step 1920 of generation of a GPS correction signal is performed. The GPS correction signal may be generated on the basis of the location information identified at step 318 and the GPS signal from the remote computing device 1810 received at step 1910. The GPS correction signal may encode information that may be processed by the location determination module 1850 of the remote computing device 1810 in order to make an adjustment to the GPS location data obtained from the GPS receiver 1830 to obtain accurate location information. At step 1930, the location information determined at step 318 and the GPS correction signal determined at 1920 may be transmitted to the remote computing device 1810.

As illustrated by the system 1800 of Figure 18 and the flowchart 1900 of Figure 19, some embodiments relate to the image processing computing service receiving images from a remote computing device, determining location information based on the images and transmitting location information or a GPS correction signal in response to the received images. Accordingly, some embodiments address inaccuracy or poor quality of GPS signals in certain environments by providing alternative methods and systems for location determination based on visual information captured in images.

**Figure 20** is a block diagram of part of an autonomous vehicle 2000 provided with the image processing computing device 130 according to some embodiments. The autonomous vehicle 2000 comprises an autonomous vehicle computing device 2030 to perform the various operations to control the driving operations of the autonomous vehicle 2000. In some embodiments, the autonomous vehicle computing device 2030 is in communication with the image processing computing device 130, and in some embodiments, the components and functions of the image processing computing device 130 are subsumed in and form part of the autonomous vehicle computing device 2030. The autonomous or self-driving vehicle 2000 may rely on a combination of the GPS receiver 126 and the image processing computing device 130 for determining its location. The autonomous vehicle 2000 may switch to location determination based on the image processing computing device 130 in urban environments and/or areas where the quality or precision of the signals received by the GPS receiver is less then optimal for autonomous driving. An image based location determination trigger event may initiate an operational mode in which the autonomous vehicle 2000 frequently makes determinations of its location using the image processing computing device 130. The trigger event may include poor quality or low precision data received by the GPS receiver 126 or the vehicle 110 passing through a predefined geo-fence designating an area where image based location estimation may be more reliable. In some embodiments, parts of the image processing and location estimation computational capabilities may be implemented on the remote server system 2040 and the autonomous vehicle computing device 2030 may be configured to wirelessly communicate with the remote server system 2040. The wireless communication may be performed through a cellular network such as a 3g, 4g or 5g cellular network for example.

**Figure 21** is an example image pair 2100 illustrating a stage in the process of background matching performed by the background matching module 152. Image 2100 comprises two parts, a first image 2130 and a second image 2140. Image 2140 is a reference background image stored in the reference background image library 144. Image 2130 is an image captured by camera 120 during the course of parking surveillance in an urban area. The various parts of a background in image 2140 provide a basis for comparison with the image 2130 and enable the determination of a parking location based on the location metadata associated with reference image 2140. It is assumed that each captured image 2130 will have various static image features that are also present in a reference image 2140 taken at substantially the same location, even if various dynamic image features will vary over time. For example, feature 2112 (part of a light post) in image 2140 corresponds to the identical feature 2102 in the captured image 2130. Feature 2114 (part of a foot of a letter box) in image 2140 corresponds to the identical feature 2104 in the captured image 2130. Feature 2116 (part of a facade of a building) in image 2140 corresponds to the identical facade feature 2106 in the captured image 2130. Feature 2118 (a textured grate or part of the footpath) in image 2140 corresponds to the identical grate or footpath feature 2108 in the captured image 2130. Feature 2120 (a non-dynamic/static part of a signboard) in image 2140 corresponds to the identical feature 2110 in the captured image 2130. Unlike the images of Figure 8, the images of Figure 21 have been captured at an approximately 90 degree angle to the direction of travel of the surveillance vehicle 110.

During experimentation, accuracy of the embodiments was evaluated to benchmark the performance of the embodiments. Accuracy was measured based on an accuracy of the location determined at step 216, or step 318 using a margin of error of 0.5m to 2m, for example. For some embodiments, the accuracy of location determined was in the order of 95% or greater when location estimation was performed over an urban area extending over a length of 30km, 40km, 50km, 60km or 70km, for example. The accuracy performance of 95% or greater was obtained in both daytime and night time conditions and over different seasons of the year, including winter and summer.

The various models and modules of computing device 130 including the parking indicator machine learning model 142, background matching module 152, licence plate detection machine learning model 159, vehicle detection machine learning model 158 may be or comprise program code, libraries, Application Programming Interfaces (APIs), metadata, configuration data, dependencies, frameworks and other necessary code components or hardware components to implement the functionality of the various modules or models. The various machine learning models or components may incorporate alternative machine learning methodologies including: supervised, unsupervised, semi-supervised or reinforcement learning based methodologies, for example. The various machine learning models or components may incorporate one or more components from machine learning frameworks including: OpenCV, TensorFlow, PyTorch, Caffe, EmuCV, VXL, GDAL, MIScnn, Marvin, and Kornia, for example.

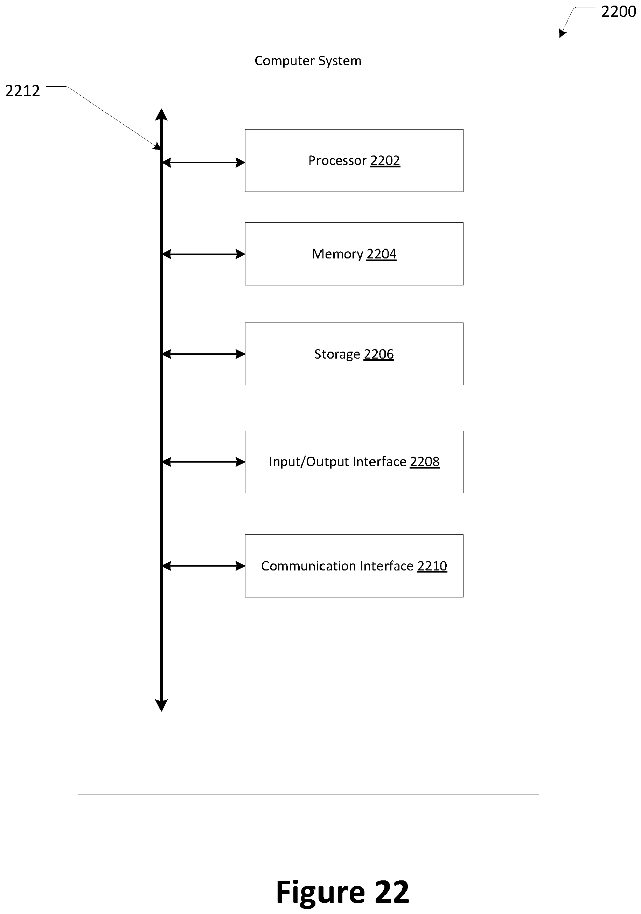

Figure 22 illustrates an example computer system 2200 according to some embodiments. In particular embodiments, one or more computer systems 2200 perform one or more steps of one or more methods described or illustrated herein. In particular embodiments, one or more computer systems 2200 provide functionality described or illustrated herein. In particular embodiments, software running on one or more computer systems 2200 performs one or more steps of one or more methods described or illustrated herein or provides functionality described or illustrated herein. Particular embodiments include one or more portions of one or more computer systems 2200. Herein, reference to a computer system may encompass a computing device, and vice versa, where appropriate. Moreover, reference to a computer system may encompass one or more computer systems, where appropriate. Computing device 130 is an example of computer system 2200. Computing device 1810 is another example of computer system 2200.

This disclosure contemplates any suitable number of computer systems 2200. This disclosure contemplates computer system 2200 taking any suitable physical form. As example and not by way of limitation, computer system 2200 may be an embedded computer system, a system-on-chip (SOC), a single-board computer system (SBC) (such as, for example, a computer-on-module (COM) or system-on-module (SOM)), a special-purpose computing device, a desktop computer system, a laptop or notebook computer system, a mobile telephone, a server, a tablet computer system, or a combination of two or more of these. Where appropriate, computer system 2200 may: include one or more computer systems 2200; be unitary or distributed; span multiple locations; span multiple machines; span multiple data centers; or reside partly or wholly in a computing cloud, which may include one or more cloud computing components in one or more networks. Where appropriate, one or more computer systems 2200 may perform without substantial spatial or temporal limitation one or more steps of one or more methods described or illustrated herein. As an example and not by way of limitation, one or more computer systems 2200 may perform in real time or in batch mode one or more steps of one or more methods described or illustrated herein. One or more computer systems 2200 may perform at different times or at different locations one or more steps of one or more methods described or illustrated herein, where appropriate.

In particular embodiments, computer system 2200 includes at least one processor 2202, memory 2204, storage 2206, an input/output (I/O) interface 2208, a communication interface 2210, and a bus 2212. Although this disclosure describes and illustrates a particular computer system having a particular number of particular components in a particular arrangement, this disclosure contemplates any suitable computer system having any suitable number of any suitable components in any suitable arrangement.

In particular embodiments, processor 2202 includes hardware for executing instructions, such as those making up a computer program. As an example and not by way of limitation, to execute instructions, processor 2202 may retrieve (or fetch) the instructions from an internal register, an internal cache, memory 2204, or storage 2206; decode and execute them; and then write one or more results to an internal register, an internal cache, memory 2204, or storage 2206. In particular embodiments, processor 2202 may include one or more internal caches for data, instructions, or addresses. This disclosure contemplates processor 2202 including any suitable number of any suitable internal caches, where appropriate. As an example and not by way of limitation, processor 2202 may include one or more instruction caches, one or more data caches, and one or more translation lookaside buffers (TLBs). Instructions in the instruction caches may be copies of instructions in memory 2204 or storage 2206, and the instruction caches may speed up retrieval of those instructions by processor 2202. Data in the data caches may be copies of data in memory 2204 or storage 2206 for instructions executing at processor 2202 to operate on; the results of previous instructions executed at processor 2202 for access by subsequent instructions executing at processor 2202 or for writing to memory 2204 or storage 2206; or other suitable data. The data caches may speed up read or write operations by processor 2202. The TLBs may speed up virtual-address translation for processor 2202. In particular embodiments, processor 2202 may include one or more internal registers for data, instructions, or addresses. This disclosure contemplates processor 2202 including any suitable number of any suitable internal registers, where appropriate. Where appropriate, processor 2202 may include one or more arithmetic logic units (ALUs); be a multi-core processor; or include one or more processors 2202. Although this disclosure describes and illustrates a particular processor, this disclosure contemplates any suitable processor.

In particular embodiments, memory 2204 includes main memory for storing instructions for processor 2202 to execute or data for processor 2202 to operate on. As an example and not by way of limitation, computer system 2200 may load instructions from storage 2206 or another source (such as, for example, another computer system 2200) to memory 2204. Processor 2202 may then load the instructions from memory 2204 to an internal register or internal cache. To execute the instructions, processor 2202 may retrieve the instructions from the internal register or internal cache and decode them. During or after execution of the instructions, processor 2202 may write one or more results (which may be intermediate or final results) to the internal register or internal cache. Processor 2202 may then write one or more of those results to memory 2204. In particular embodiments, processor 2202 executes only instructions in one or more internal registers or internal caches or in memory 2204 (as opposed to storage 2206 or elsewhere) and operates only on data in one or more internal registers or internal caches or in memory 2204 (as opposed to storage 2206 or elsewhere). One or more memory buses (which may each include an address bus and a data bus) may couple processor 2202 to memory 2204. Bus 2212 may include one or more memory buses, as described below. In particular embodiments, one or more memory management units (MMUs) reside between processor 2202 and memory 2204 and facilitate accesses to memory 2204 requested by processor 2202. In particular embodiments, memory 2204 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 2204 may include one or more memories 2204, where appropriate. Although this disclosure describes and illustrates particular memory, this disclosure contemplates any suitable memory.

In particular embodiments, storage 2206 includes mass storage for data or instructions. As an example and not by way of limitation, storage 2206 may include a hard disk drive (HDD), a floppy disk drive, flash memory, an optical disc, a magneto-optical disc, magnetic tape, or a Universal Serial Bus (USB) drive or a combination of two or more of these. Storage 2206 may include removable or non-removable (or fixed) media, where appropriate. Storage 2206 may be internal or external to computer system 2200, where appropriate. In particular embodiments, storage 2206 is non-volatile, solid-state memory. In particular embodiments, storage 2206 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 2206 taking any suitable physical form. Storage 2206 may include one or more storage control units facilitating communication between processor 2202 and storage 2206, where appropriate. Where appropriate, storage 2206 may include one or more storages 2206. Although this disclosure describes and illustrates particular storage, this disclosure contemplates any suitable storage.

In particular embodiments, I/O interface 2208 includes hardware, software, or both, providing one or more interfaces for communication between computer system 2200 and one or more I/O devices. Computer system 2200 may include one or more of these I/O devices, where appropriate. One or more of these I/O devices may enable communication between a person and computer system 2200. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 2208 for them. Where appropriate, I/O interface 2208 may include one or more device or software drivers enabling processor 2202 to drive one or more of these I/O devices. I/O interface 2208 may include one or more I/O interfaces 2208, where appropriate. Although this disclosure describes and illustrates a particular I/O interface, this disclosure contemplates any suitable I/O interface.

In particular embodiments, communication interface 2210 includes hardware, software, or both providing one or more interfaces for communication (such as, for example, packet-based communication) between computer system 2200 and one or more other computer systems 2200 or one or more networks. As an example and not by way of limitation, communication interface 2210 may include a network interface controller (NIC) or network adapter for communicating with a wireless adapter for communicating with a wireless network, such as a WI-FI or a cellular network. This disclosure contemplates any suitable network and any suitable communication interface 2210 for it. As an example and not by way of limitation, computer system 2200 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 2200 may communicate with a wireless cellular telephone network (such as, for example, a Global System for Mobile Communications (GSM) network, or a 3G, 4G or 5G cellular network), or other suitable wireless network or a combination of two or more of these. Computer system 2200 may include any suitable communication interface 2210 for any of these networks, where appropriate. Communication interface 2210 may include one or more communication interfaces 2210, where appropriate. Although this disclosure describes and illustrates a particular communication interface, this disclosure contemplates any suitable communication interface.

In particular embodiments, bus 2212 includes hardware, software, or both coupling components of computer system 2200 to each other. As an example and not by way of limitation, bus 2212 may include an Accelerated Graphics Port (AGP) or other graphics bus, an Enhanced Industry Standard Architecture (EISA) bus, a frontside bus (FSB), a HYPER TRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 2212 may include one or more buses 2212, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, (FDDs), solid-state drives (SSDs), RAM-drives, or any other suitable computer-readable non-transitory storage media, or any suitable combination of two or more of these, where appropriate. A computer-readable non-transitory storage medium may be volatile, non-volatile, or a combination of volatile and non-volatile, where appropriate.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

It will be appreciated by persons skilled in the art that numerous variations and/or modifications may be made to the above-described embodiments, without departing from the broad general scope of the present disclosure. The present embodiments are, therefore, to be considered in all respects as illustrative and not restrictive.

### CLAUSES:

1. A system for parking monitoring in an urban area, the system comprising: at least one camera, wherein the at least one camera is positioned to capture images of the urban area; a computing device in communication with the at least one camera to receive the captured images; the computing device comprising at least one processor and a memory accessible to the at least one processor; wherein the memory comprises a library of reference background images and metadata for each reference background image, wherein the metadata comprises parking location information and parking condition information; wherein the memory stores program code executable by the at least one processor to configure the at least one processor to: process a first captured image to determine a licence plate number corresponding to a target vehicle in the first captured image; process a second captured image using a background matching module to identify a matching reference background image; determine an identified parking location of the target vehicle and at least one parking condition based on the metadata of the matching reference background image; determine compliance of the target vehicle with the determined at least one parking condition.
2. The system of clause 1, wherein the first captured image is the same captured image as the second captured image.
3. A system for parking monitoring in an urban area, the system comprising: at least one camera, wherein the at least one camera is positioned to capture images of the urban area; a computing device in communication with the at least one camera to receive the captured images; the computing device comprising at least one processor and a memory accessible to the at least one processor; wherein the memory comprises a library of reference background images and metadata for each reference background image, wherein the metadata comprises parking location information; the memory also comprises program code executable by the at least one processor to configure the at least one processor to: process the captured images using a parking indicator detection machine learning model to identify a parking indicator in at least one of the captured images; on identifying the parking indicator, process the captured images using a background matching module to identify a matching reference background image that matches one of the captured images; determine a parking location based on the metadata associated with the matching reference background image; determine parking conditions based on the identified parking indicator; process the captured images to determine a licence plate number corresponding to a target vehicle; and determine compliance of the target vehicle to the determined parking conditions.
4. The system of any one of clauses 1 to 3, wherein the licence plate number corresponding to the target vehicle is determined using a licence plate detection machine learning model.
5. The system of clause 3 or clause 4, wherein the parking indicators comprise parking signs or licence plates and the parking indicator detection machine learning model detects parking signs or licence plates in the captured images.
6. The system of any one of clauses 1 to 5, wherein the memory further comprises parking perimeter metadata associated with each reference background image, and the at least one processor is further configured to: process the at least one captured image to identify an image portion corresponding to the target vehicle in one of the captured images; determine compliance of the target vehicle to the determined parking conditions based on the parking perimeter metadata associated with the matching reference background image and the image portion corresponding to the target vehicle.
7. The system of clause 6, wherein the image portion corresponding to the target vehicle is identified using a vehicle detection machine learning model.
8. The system of any one of clauses 1 to 7, wherein the background matching module comprises: a background feature extractor neural network, and the at least one processor is further configured to identify the matching reference background image by: extracting background descriptors from the at least one captured image using the background feature extractor neural network; selecting one or more candidate matching images from the library of background images based on the extracted background descriptors; performing geometric matching between the at least one captured image and the candidate matching images to select the matching reference background image.
9. The system of clause 8, wherein the geometric matching is performed using a random sample consensus process.
10. The system of any one of clauses 1 to 9, wherein: the parking location information comprises a street name and a street number; or the parking location information comprises a street name, a street number and a parking bay identifier; or the parking location information comprises a longitude coordinate and a latitude coordinate associated with the parking location.
11. The system of any one of clauses 1 to 10, wherein the one or more cameras are mounted on a surveillance vehicle, the computing device is carried by the surveillance vehicle, and the system further comprises a communication module to enable wireless communication between the computing device and a remote computer system.
12. The system of clause 11, wherein the system is configured to perform parking monitoring in real time as the surveillance vehicle moves in the urban area.
13. The system of clause 11 or clause 12, wherein the system comprises at least two cameras, with at least one camera positioned on each side of the surveillance vehicle to perform parking monitoring on both sides of the surveillance vehicle.
14. The system of clause 11 or clause 12, wherein the system comprises at least two cameras, both cameras are positioned to capture images on one side of the surveillance vehicle; and the background matching module is configured to perform background matching using captured images from each of the at least two cameras to identify a matching reference background image.
15. The system of any one of clauses 11 to 14, wherein the at least one processor is further configured to track the target vehicle across the captured images as the surveillance vehicle moves in the urban area.
16. The system of clause 11, wherein the at least one processor is further configured to transmit to the remote computer system via the communication module one or more of: the determined compliance of the target vehicle with the determined parking conditions; the determined licence plate number corresponding to the target vehicle; the determined parking location; or captured images of the target vehicle.
17. The system of clause 4, wherein the licence plate detection machine learning model is configured to identify a portion of the captured image corresponding to a license plate of the target vehicle, and the licence plate number is determined based on processing the portion of the captured image corresponding to the license plate by a character recognition module.
18. The system of clause 3, wherein the parking conditions are determined based on characters recognised by processing a portion of the at least one captured image corresponding to the identified parking signs using a character recognition module.
19. The system of any one of clause 1 to 18, wherein at least one reference background image relates to a parking zone start location and another at least one reference background image relates to a parking zone end location, and determination of compliance of the target vehicle to the identified at least one parking condition is based on: distance between the identified parking location and the parking zone start location; or distance between the identified parking location and the parking zone end location.
20. A computer implemented method for parking monitoring performed by a computing device comprising at least one processor in communication with a memory, the memory comprising a library of reference background images, the method comprising: receiving images of an urban area captured by a camera in communication with the computing device; processing the captured images using a parking indicator detection machine learning model to identify one or more parking indicators in at least one captured image; on identifying at least one parking indicator in the at least one captured image, process the at least one captured image using a background matching module to identify a matching reference background image; determining a parking location based on the matching reference background image; determining parking conditions based on the determined parking location or the identified one or more parking indicators; processing the at least one captured image to determine a licence plate number corresponding to a target vehicle in the at least one captured image; and determining compliance of the target vehicle to the determined parking conditions based on the determined licence plate number and the determined parking conditions.
21. A system for location determination, the system comprising: a computing device comprising at least one processor and a memory accessible to the at least one processor; wherein the memory comprises a library of reference background images and metadata for each reference background image, wherein the metadata comprises location information; and wherein the memory stores program code executable by the at least one processor to configure the at least one processor to: receive an input image data from a remote computing device, wherein the input image data includes image data of at least one image captured by the remote computing device at a location to be determined; process the received input image data using a background matching module to identify matching reference background image; determine location information corresponding to the input image data based on the metadata of the matching reference background image in the library; and transmit the determined location information to the remote computing device.
22. The system of clause 21, wherein the background matching module comprises: a background feature extractor neural network, and the at least one processor is further configured to identify the matching reference background image by: extracting background descriptors from the at least one captured image using the background feature extractor neural network; selecting one or more candidate matching images from the library of background images based on the extracted background descriptors; performing geometric matching between the at least one captured image and the candidate matching images to select the matching reference background image.
23. The system of clause 22, wherein the geometric matching comprises identifying common visual features in the at least one captured image and each of the candidate matching images.
24. The system of clause 22 or clause 23, wherein the geometric matching is performed using a random sample consensus process.
25. The system of any one of clauses 22 to 24, wherein the background feature extractor neural network is trained to extract background descriptors corresponding to one or more stationary features in the at least one captured image.
26. The system of any one of clauses 21 to 25, wherein the memory stores program code executable by the at least one processor to further configure the at least one processor to: receive GPS data corresponding to the input image from the remote computing device, wherein the GPS data comprises a low data quality indicator; generate a GPS correction signal based on the determined location information; transmit the GPS correction signal to the remote computing device.
27. A vehicle mounted system for location determination in an urban area, the system comprising: at least one camera, wherein the at least one camera is positioned to capture images of the urban area; computing device in communication with the at least one camera to receive the captured images, the computing device comprising at least one processor and a memory accessible to the at least one processor, the memory comprising a library of reference background images; wherein the memory comprises program code executable by the at least one processor to configure the at least one processor to: extract background descriptors from at least one captured image; select one or more candidate matching reference images from the library of background images based on the extracted background descriptors; perform geometric matching between the at least one captured image and the one or more candidate matching reference images to select a single matching reference background image; and determine a location of the vehicle based on the single matching reference background image.
28. The system of clause 27, wherein the memory further comprises location metadata corresponding to each reference background image; and the location of the vehicle is determined based on the location metadata corresponding to corresponding to the single matching reference background image.
29. The system of clause 27 or clause 28, wherein the background descriptors are extracted from at least one captured image using a background feature extractor neural network.
30. The system of any one of clauses 27 to 29, wherein determining the location is performed in real time.
31. A computer implemented method for determining a location of a vehicle, the method performed by a vehicle mounted computing device comprising at least one processor in communication with a memory, the memory comprising a library of reference background images, the method comprising: receiving images of an urban area captured by a camera in communication with the computing device; extracting background descriptors from at least one image captured by the camera; selecting one or more candidate matching reference images from the library of background images based on the extracted background descriptors; perform geometric matching between the at least one captured image and the one or more candidate matching reference images to select a single matching reference background image; and determine a location of the vehicle based on the single matching reference background image.
32. A computer implemented method for determining a location of a vehicle in an urban area, the method performed by a vehicle mounted computing device comprising at least one processor in communication with a memory and at least one camera, the memory comprising a library of reference background images, the method comprising: capturing an image of the urban area while the at least one camera is moving in the urban area; processing the captured image using a background matching module to identify a matching reference background image; determining a location of the vehicle based on a metadata of the matching reference background image.
33. The method of clause 32, wherein the at least one camera is mounted on the vehicle.
34. The method of clause 32 or clause 33, wherein the determination of the location of the vehicle is performed in real time by the vehicle mounted computing device.
35. A system for location determination in an urban area, the system comprising: at least one camera, wherein the at least one camera is positioned to capture images of the urban area while the at least one camera is moving in the urban area; a computing device moving with the at least one camera and in communication with the at least one camera to receive the captured images; the computing device comprising at least one processor and a memory accessible to the at least one processor; wherein the memory comprises a library of reference background images and metadata for each reference background image, wherein the metadata comprises location information; wherein the memory stores program code executable by the at least one processor to configure the at least one processor to: process a captured image using a background matching module to identify a matching reference background image; determine a location of the at least one camera and the computing device based on the metadata of the matching reference background image.
36. The system of clauses 35, wherein processing the captured image using a background matching module comprises: extracting background descriptors from the captured image; selecting one or more candidate matching images from the library of reference background images based on the extracted background descriptors; performing geometric matching between the captured image and the candidate matching images to select the matching reference background image.
37. The system of clause 36, wherein the background matching module comprises a background feature extractor neural network configured to extract background descriptors corresponding to one or more stationary features in the at least one captured image.
38. The system of clause 36 or clause 37, wherein the geometric matching is performed using a random sample consensus process; and wherein the geometric matching comprises identifying common visual features in the at least one captured image and each of the candidate matching images.
39. The system of any one of clauses 35 to 38, wherein the computing device is configured to determine the location in real-time.
40. A vehicle mounted with the system of any one of clause 35 to 39, wherein the at least one camera is mounted on the vehicle to capture images of a vicinity of the vehicle.
41. The vehicle of clause 40, wherein the vehicle is an autonomous driving vehicle.
42. The vehicle of clause 41, wherein the vehicle comprises an on-board GPS receiver and the vehicle is configured to trigger location determination using the system for location determination in response to an image based location determination trigger event.
43. The vehicle of clause 42, wherein the image based location determination trigger event may comprise at least one of: low precision GPS data being generated by the on-board GPS receiver; or crossing of a predefined geo-fence by the vehicle.
44. A computer implemented method for location determination, the method performed by a computing device comprising at least one processor in communication with a memory, the method comprising: receiving an input image by the computing device from a remote computing device, wherein the input image corresponds to a location to be determined; processing the received input image using a background matching module provided in the memory of the computing device to identify a matching reference background image from among a library of reference background images stored in the memory; determining location information corresponding to the input image based on the metadata of the matching reference background image; and transmitting the determined location information to the remote computing device.
45. The method of clause 44, wherein the background matching module comprises: a background feature extractor neural network, and the method further comprises identifying the matching reference background image by: extracting background descriptors from the at least one captured image using the background feature extractor neural network; selecting one or more candidate matching images from the library of background images based on the extracted background descriptors; performing geometric matching between the at least one captured image and the candidate matching images to select the matching reference background image.
46. The method of clause 45, wherein the geometric matching comprises identifying common visual features in the at least one captured image and each of the candidate matching images.
47. The method of clause 45 or clause 46 wherein the geometric matching is performed using a random sample consensus process.
48. The method of any one of clauses 45 to 47, wherein the background feature extractor neural network is trained to extract background descriptors corresponding to one or more permanent stationary features in the at least one captured image.
49. The method of any one of clauses 45 to 48, wherein the method further comprises: receiving GPS data corresponding to the input image from the remote computing device, wherein the GPS data comprises a low data quality indicator; generating a GPS correction signal based on the determined location information; transmitting the GPS correction signal to the remote computing device; wherein the GPS correction signal comprises information accessible by the remote computing device to determine a more accurate GPS location data.
50. A computer-readable storage medium storing instructions that when executed by a computer cause the computer to perform the method of any one of clauses 20, 31 to 34 and 44 to 49.
51. A system for parking monitoring in an urban area, the system comprising: at least one camera, wherein the at least one camera is positioned to capture images of the urban area; a computing device in communication with the at least one camera to receive the captured images; the computing device comprising at least one processor and a memory accessible to the at least one processor; wherein the memory comprises a library of reference background images; the memory also comprises program code executable by the at least one processor to configure the at least one processor to: process the captured images using a parking indicator detection machine learning model to identify one or more parking indicators in at least one captured image; on identifying at least one parking indicator in the at least one captured image, process the at least one captured image using a background matching module to identify a matching reference background image; determine a parking location based on the matching reference background image; determine parking conditions based on the determined parking location or the identified one or more parking indicators; process the at least one captured image to determine a licence plate number corresponding to a target vehicle in the at least one captured image; and determine compliance of the target vehicle to the determined parking conditions based on the determined licence plate number and the determined parking conditions.

## Claims

1. A system for location determination, the system comprising:
a computing device comprising at least one processor and a memory accessible to the at least one processor;
wherein the memory comprises a library of reference background images and metadata for each reference background image, wherein the metadata comprises location information; and
wherein the memory stores program code executable by the at least one processor to configure the at least one processor to:
receive an input image data from a remote computing device, wherein the input image data includes image data of at least one image captured by the remote computing device at a location to be determined;
process the received input image data using a background matching module to identify matching reference background image;
determine location information corresponding to the input image data based on the metadata of the matching reference background image in the library; and
transmit the determined location information to the remote computing device.

2. The system of claim 1, wherein the background matching module comprises: a background feature extractor neural network, and the at least one processor is further configured to identify the matching reference background image by:
extracting background descriptors from the at least one captured image using the background feature extractor neural network;
selecting one or more candidate matching images from the library of background images based on the extracted background descriptors;
performing geometric matching between the at least one captured image and the candidate matching images to select the matching reference background image.

3. The system of claim 2, wherein the geometric matching comprises identifying common visual features in the at least one captured image and each of the candidate matching images.

4. The system of claim 2 or claim 3, wherein the geometric matching is performed using a random sample consensus process.

5. The system of any one of claims 2 to 4, wherein the background feature extractor neural network is trained to extract background descriptors corresponding to one or more stationary features in the at least one captured image.

6. The system of any one of claims 1 to 5, wherein the memory stores program code executable by the at least one processor to further configure the at least one processor to:
receive GPS data corresponding to the input image from the remote computing device, wherein the GPS data comprises a low data quality indicator;
generate a GPS correction signal based on the determined location information;
transmit the GPS correction signal to the remote computing device.

7. A computer implemented method for determining a location of a vehicle in an urban area, the method performed by a vehicle mounted computing device comprising at least one processor in communication with a memory and at least one camera, the memory comprising a library of reference background images, the method comprising:
capturing an image of the urban area while the at least one camera is moving in the urban area;
processing the captured image using a background matching module to identify a matching reference background image;
determining a location of the vehicle based on a metadata of the matching reference background image.

8. The method of claim 7, wherein the at least one camera is mounted on the vehicle.

9. The method of claim 7 or claim 8, wherein the determination of the location of the vehicle is performed in real time by the vehicle mounted computing device.

10. A system for location determination in an urban area, the system comprising:
at least one camera, wherein the at least one camera is positioned to capture images of the urban area while the at least one camera is moving in the urban area;
a computing device moving with the at least one camera and in communication with the at least one camera to receive the captured images;
the computing device comprising at least one processor and a memory accessible to the at least one processor;
wherein the memory comprises a library of reference background images and metadata for each reference background image, wherein the metadata comprises location information;
wherein the memory stores program code executable by the at least one processor to configure the at least one processor to:
process a captured image using a background matching module to identify a matching reference background image;
determine a location of the at least one camera and the computing device based on the metadata of the matching reference background image.

11. The system of claims 10, wherein processing the captured image using a background matching module comprises:
extracting background descriptors from the captured image;
selecting one or more candidate matching images from the library of reference background images based on the extracted background descriptors;
performing geometric matching between the captured image and the candidate matching images to select the matching reference background image.

12. The system of claim 11, wherein the background matching module comprises a background feature extractor neural network configured to extract background descriptors corresponding to one or more stationary features in the at least one captured image.

13. The system of any one of claims 10 to 12, wherein the computing device is configured to determine the location in real-time.

14. A vehicle mounted with the system of any one of claim 10 to 13, wherein the at least one camera is mounted on the vehicle to capture images of a vicinity of the vehicle, and optionally wherein the vehicle is an autonomous driving vehicle.

15. The vehicle of claim 14, wherein the vehicle comprises an on-board GPS receiver and the vehicle is configured to trigger location determination using the system for location determination in response to an image based location determination trigger event.

16. The vehicle of claim 15, wherein the image based location determination trigger event may comprise at least one of:
low precision GPS data being generated by the on-board GPS receiver; or
crossing of a predefined geo-fence by the vehicle.

17. A computer implemented method for location determination, the method performed by a computing device comprising at least one processor in communication with a memory, the method comprising:
receiving an input image by the computing device from a remote computing device, wherein the input image corresponds to a location to be determined;
processing the received input image using a background matching module provided in the memory of the computing device to identify a matching reference background image from among a library of reference background images stored in the memory;
determining location information corresponding to the input image based on the metadata of the matching reference background image; and
transmitting the determined location information to the remote computing device.

18. The method of claim 17, wherein the background matching module comprises: a background feature extractor neural network, and the method further comprises identifying the matching reference background image by:
extracting background descriptors from the at least one captured image using the background feature extractor neural network;
selecting one or more candidate matching images from the library of background images based on the extracted background descriptors;
performing geometric matching between the at least one captured image and the candidate matching images to select the matching reference background image, and optionally wherein the background feature extractor neural network is trained to extract background descriptors corresponding to one or more permanent stationary features in the at least one captured image.

19. The method of any one of claims 17 to 18, wherein the method further comprises:
receiving GPS data corresponding to the input image from the remote computing device, wherein the GPS data comprises a low data quality indicator;
generating a GPS correction signal based on the determined location information;
transmitting the GPS correction signal to the remote computing device;
wherein the GPS correction signal comprises information accessible by the remote computing device to determine a more accurate GPS location data.

20. A computer-readable storage medium storing instructions that when executed by a computer cause the computer to perform the method of any one of claims 7 to 9 and 17 to 19.
